# EUROPEAN PATENT APPLICATION

(11) **EP 4 757 293 A1**
(43) Date of publication of application: **10.06.2026**
(21) Application number: 24858186.0
(22) Date of filing: 29.07.2024
(51) Int. Cl.: H04L 67/142

(54) **COMMUNICATION METHOD, APPARATUS AND SYSTEM**

(30) Priority: 31.08.2023 CN 202311129187
(71) Applicant: HUAWEI TECHNOLOGIES CO., LTD., Shenzhen 518129 (CN)
(72) Inventor: ZHU, Fangyuan, Shenzhen, Guangdong 518129 (CN); GE, Cuili, Shenzhen, Guangdong 518129 (CN); YANG, Yanmei, Shenzhen, Guangdong 518129 (CN)
(74) Representative: Pfenning, Meinig & Partner mbB
(86) International application number: PCT/CN2024/108160
(87) International publication number: WO 2025/044643

(57) **Abstract**

This application relates to a communication method, an apparatus, and a system. A computing node obtains code of a first function based on a session establishment request of a terminal device, where the session establishment request is used to request to establish a first session. After obtaining the code of the first function, the computing node receives, from the terminal device via the first session, a first request used to access the first function, and runs the code of the first function based on first indication information, to process the first request. In embodiments of this application, the computing node may first obtain the code of the first function before receiving the first request from the terminal device, so that after receiving the first request, the computing node does not need to perform a code download process. This greatly shortens a delay of function computing, and improves efficiency of the function computing.

## Description

### CROSS-REFERENCE TO RELATED APPLICATIONS

This application claims priority to Chinese Patent Application No. 202311129187.0, filed with the China National Intellectual Property Administration on August 31, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, an apparatus, and a system.

### BACKGROUND

Function computing, also referred to as serverless computing or serverless (serverless) computing, is an emerging cloud computing programming mode in recent years. The function computing is dedicated to greatly simplifying a cloud service development procedure, so that application developers are freed from complex server operations and maintenance work. With the function computing, the developers only need to upload code of functions and perform simple resource configuration to quickly build and deploy services; and cloud service providers perform charging based on a quantity of function service calls and actual resource usage, to help users implement quick delivery and low-cost operation.

Currently, the function computing supports two types of functions: an event function and a hypertext transfer protocol (hypertext transfer protocol, HTTP) function. The HTTP function is mainly applicable to a scenario such as quickly building a network (Web) application. The HTTP function may be considered as a network server (Web Server). The HTTP function may process an HTTP request, and return a processing result to a calling end of the HTTP function.

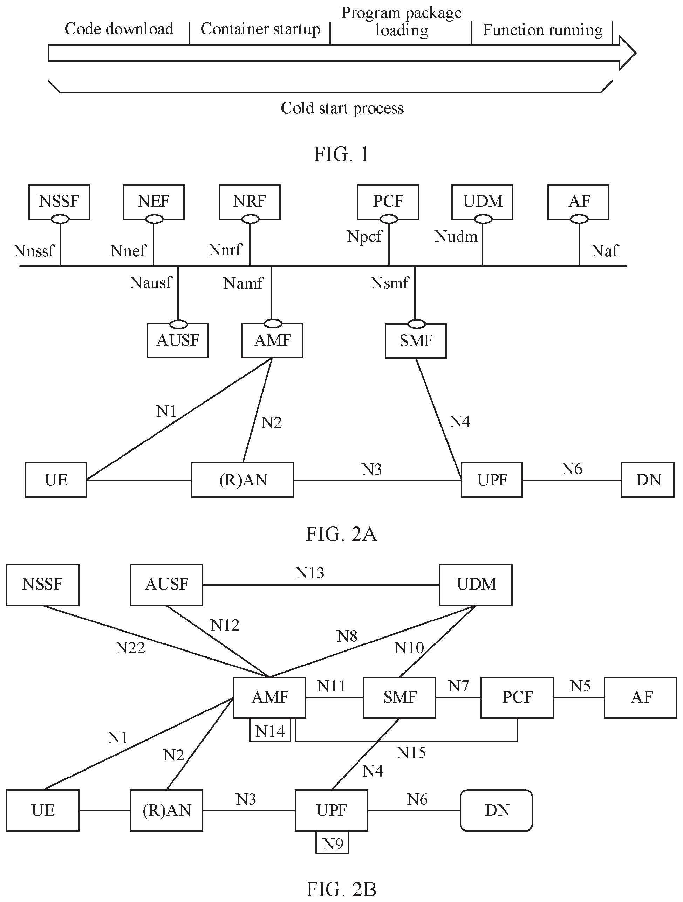

A function is usually released after a request is executed. The HTTP function is used as an example. When the HTTP request arrives, if there is no available function instance, a new function instance needs to be started from zero to process the HTTP request, that is, cold start is performed. The cold start includes steps such as code download, function instance container startup, runtime initialization, and code initialization in a function call chain. Refer to FIG. 1. Only after the cold start is completed, and the function instance is ready, execution of the HTTP request can be started. It can be learned that, in a cold start process, the code download needs to be completed first. However, this process lasts for a long period, resulting in a long delay of the function computing.

### SUMMARY

Embodiments of this application provide a communication method, an apparatus, and a system, to shorten a delay of function computing.

According to a first aspect, a first communication method is provided. The method may be performed by a computing node, or may be performed by a chip system. The chip system can implement a function of the computing node. The computing node is, for example, a UPF or a server. The method includes: obtaining code of a first function based on a session establishment request of a terminal device, where the session establishment request is used to request to establish a first session; after obtaining the code of the first function, receiving, from the terminal device via the first session, a first request used to access the first function; and running the code of the first function based on first indication information, to process the first request.

In this embodiment of this application, the computing node may first obtain the code of the first function before receiving the first request from the terminal device. This is equivalent to that the computing node first obtains the code of the first function before receiving the request used to access the first function, so that a code download process does not need to be performed after the first request is received, for example, a process after code download included in cold start is performed. This greatly shortens a delay of function computing, and improves efficiency of the function computing.

In an optional implementation, the first request includes first indication information, and the first indication information is used to determine the code of the first function. The first indication information is, for example, an index of the code of the first function, or a URL corresponding to the code of the first function. The code of the first function may be determined based on the first indication information.

In an optional implementation, the obtaining the code of the first function based on the session establishment request of the terminal device includes: receiving second indication information from a first network element, where the second indication information is used to determine the code of the first function, and the second indication information is received in a procedure of establishing the first session; sending a second request to a second network element, where the second request includes the second indication information, the second request is used to request the code of the first function, and the second indication information is used by the second network element to determine the code of the first function; and receiving the code of the first function from the second network element. If the code of the first function may be stored in the second network element, the computing node may obtain the code of the first function from the second network element based on the second indication information. The second network element is, for example, an application server, for example, an AF. The computing node may request the code of the first function from the AF. Alternatively, the second network element is, for example, a database, and the database is, for example, located in a core network. The AF may pre-store the code of the first function in the database, and the computing node requests the code of the first function from the database. In comparison with requesting the code of the first function from the AF, a delay can be shortened.

In an optional implementation, the obtaining the code of the first function based on the session establishment request of the terminal device includes: receiving second indication information and the code of the first function from a first network element, where the second indication information is used to determine the code of the first function, and the second indication information and the code of the first function are sent by the first network element in a procedure of establishing the first session. In this implementation, if the first network element may directly send the code of the first function to the computing node, the computing node does not need to request the code of the first function from another network element, so that an interaction process between the network elements can be reduced.

In an optional implementation, the first network element includes a CMF or a UPF, and may also include another network element. This is not limited.

In an optional implementation, the method further includes: receiving a first release indication, where the first release indication indicates to release the first session; and deleting (or releasing) the code of the first function. The session of the terminal device may be further released after being established. In this case, when the session of the terminal device is released, the code of the first function may also be released, thereby saving storage space of the computing node.

In an optional implementation, the deleting the code of the first function includes: when there is no session used to access the first function, deleting the code of the first function. One or more sessions (corresponding to one or more terminal devices, where one terminal device may correspond to at least one session) may be used to request to access the first function. In this case, provided that one session is still used to request to access the first function, the code of the first function is not to be deleted. Therefore, the computing node may delete the code of the first function only when determining that there is no session used to request to access the first function, so that a speed of accessing the first function by the terminal device is not affected, and storage space of the computing node can also be saved.

In an optional implementation, after the obtaining the code of the first function based on the session establishment request of the terminal device, the method further includes: storing a correspondence between information about the terminal device and the code of the first function, where the correspondence indicates that there is a session used by the terminal device to access the first function. The foregoing describes a case that the computing node may delete the code of the first function when determining that there is no session used to request to access the first function. A manner in which the computing node needs to determine whether there is a session used to request to access the first function includes: The computing node determines whether there is information about a terminal device corresponding to the code of the first function. If there is the information about the terminal device corresponding to the code of the first function, it is determined that there is the session accessing the first function; or if there is no information about the terminal device corresponding to the code of the first function, it is determined that there is no session accessing the first function. In this manner, the computing node can delete the code of the first function on an appropriate occasion.

In an optional implementation, the information about the terminal device includes one or more of an identifier of a session corresponding to the terminal device, an identity of the terminal device, or address information of the terminal device. The session corresponding to the terminal device is, for example, an N4 session; and the address of the terminal device is, for example, an IP address.

In an optional implementation, the computing node includes a UPF or a server.

According to a second aspect, a second communication method is provided. The method may be performed by a first network element, or may be performed by a chip system. The chip system can implement a function of the first network element. The first network element includes, for example, a CMF, or includes another network element. The method includes: receiving a session establishment request from a terminal device, where the session establishment request is used to request to establish a first session, and the first session is used by the terminal device to access a first function; determining a first DNAI corresponding to location information of the terminal device; determining a first computing node corresponding to the first DNAI, where the first computing node supports the first function; sending second indication information to the first computing node, where the second indication information is used to determine code of the first function; and sending a session establishment accept message to the terminal device, where the session establishment accept message indicates that the establishment of the first session is completed, the code of the first function is used to process a request that is from the terminal device and that is used to access the first function, and the request used to access the first function is sent by the terminal device after the terminal device receives the session establishment accept message.

In an optional implementation, the method further includes: receiving policy information from a PCF, where the policy information includes a correspondence between the first DNAI and the second indication information.

In an optional implementation, the method further includes: when the terminal device moves from a first access network device to a second access network device, determining a second DNAI corresponding to current location information of the terminal device; determining a second computing node corresponding to the second DNAI, where the second computing node supports the first function; and sending the second indication information to the second computing node, where the policy information further includes a correspondence between the second DNAI and the second indication information. If a cell handover occurs on a terminal device, the first network element may reselect a computing node for the terminal device, for example, select the second computing node, and the first network element may send the second indication information to the second computing node. The second computing node may first obtain the code of the first function before receiving the request that is from the terminal device and that is used to access the first function. This greatly shortens a delay of function computing, and improves efficiency of the function computing.

In an optional implementation, the method further includes: sending a second release indication to the first computing node, where the second release indication indicates to release the first session. Because a terminal device has moved, and a new computing node has provided a service for the terminal device, the first computing node does not need to maintain a session with the terminal device, but may release the session. In addition, after receiving the second release indication, the first computing node may further delete the code of the first function, or may delete the code of the first function when determining that no terminal device accesses the first function, so that storage space of the first computing node can be saved.

In an optional implementation, the method further includes: sending a first release indication to the second computing node, where the first release indication indicates to release a session between the second computing node and the terminal device, and the second computing node is a computing node that serves the terminal device after the terminal device performs path switching. Optionally, after receiving the first release indication, the second computing node may further delete the code of the first function, or may delete the code of the first function when determining that no terminal device accesses the first function, so that storage space of the second computing node can be saved.

In an optional implementation, the first network element includes a CMF.

For technical effects achieved by the second aspect or some optional implementations, refer to the descriptions of the technical effects of the first aspect or the corresponding implementations.

According to a third aspect, a third communication method is provided. The method may be performed by a first network element, or may be performed by a chip system. The chip system can implement a function of the first network element. The first network element includes, for example, a CMF, or includes another network element. The method includes: receiving a session establishment request from a terminal device, where the session establishment request is used to request to establish a first session, and the first session is used by the terminal device to access a first function; determining a first DNAI corresponding to location information of the terminal device; determining a first computing node corresponding to the first DNAI, where the first computing node supports the first function; sending second indication information and code of the first function to the first computing node, where the second indication information is used to determine the code of the first function; and sending a session establishment accept message to the terminal device, where the session establishment accept message indicates that the establishment of the first session with the terminal device is completed, the code of the first function is used to process a request that is from the terminal device and that is used to access the first function, and the request used to access the first function is received after the session establishment accept message is sent.

In an optional implementation, the method further includes: receiving policy information from a PCF, where the policy information includes a correspondence between the code of the first function, the first DNAI, and the second indication information.

In an optional implementation, the method further includes: when the terminal device moves from a first access network device to a second access network device, determining a second DNAI corresponding to current location information of the terminal device; determining a second computing node corresponding to the second DNAI, where the second computing node supports the first function; and sending the second indication information and the code of the first function to the second computing node, where the policy information further includes a correspondence between the code of the first function, the second DNAI, and the second indication information.

In an optional implementation, the method further includes: sending a second release indication to the first computing node, where the second release indication indicates to release the first session.

In an optional implementation, the method further includes: sending a first release indication to the second computing node, where the first release indication indicates to release a session between the second computing node and the terminal device, and the second computing node is a computing node that serves the terminal device after the terminal device performs path switching.

In an optional implementation, the first network element includes a CMF.

For technical effects achieved by the third aspect or the optional implementations, refer to the descriptions of the technical effects of the first aspect or the corresponding implementations, and/or refer to the descriptions of the technical effects of the second aspect or the corresponding implementations.

According to a fourth aspect, a fourth communication method is provided. The method may be performed by an application server, or may be performed by a chip system. The chip system can implement a function of the application server. The application server is, for example, an AF. The method includes: sending a third request to a second network element, where the third request includes a correspondence between code of a first function and second indication information, the second indication information is used to determine the code of the first function, the code of the first function is used by a computing node to process a request that is from a terminal device and that is used to access the first function, and the code of the first function is obtained by the computing node before the computing node receives the request used to access the first function.

In an optional implementation, the second network element includes a database, a PCF, or an NEF.

In an optional implementation, when the second network element includes the database, the method further includes: sending a fourth request to a PCF or an NEF, where the fourth request includes a correspondence between a first DNAI and the second indication information.

In an optional implementation, when the second network element includes the PCF or the NEF, that the third request includes a correspondence between code of a first function and second indication information includes: the third request includes a correspondence between the code of the first function, a first DNAI, and the second indication information.

For technical effects achieved by the fourth aspect or the optional implementations, refer to one or more of the following: the descriptions of the technical effects of the first aspect or the corresponding implementations, the descriptions of the technical effects of the second aspect or the corresponding implementations, or the descriptions of the technical effects of the third aspect or the corresponding implementations.

According to a fifth aspect, a fifth communication method is provided. The method may be performed by a computing node, or may be performed by a chip system. The chip system can implement a function of the computing node. The computing node is, for example, a UPF or a server. The method includes: obtaining code of a first function based on an indication from an NEF; receiving, from a terminal device, a first request used to access the first function, where the first request includes first indication information, and the first indication information includes information used to determine the code of the first function; and running the code of the first function based on first indication information, to process the first request.

In an optional implementation, obtaining the code of the first function based on the indication from the NEF includes: receiving second indication information from the NEF, where the second indication information is used to determine the code of the first function; sending a second request to a second network element, where the second request includes the second indication information, the second request is used to request the code of the first function, and the second indication information is used by the second network element to determine the code of the first function; and receiving the code of the first function from the second network element.

In an optional implementation, obtaining the code of the first function based on the indication from the NEF includes: receiving second indication information and information about the code of the first function from the NEF, where the second indication information is used to determine the code of the first function.

For technical effects achieved by the fifth aspect or the optional implementations, refer to one or more of the following: the descriptions of the technical effects of the first aspect or the corresponding implementations, the descriptions of the technical effects of the second aspect or the corresponding implementations, or the descriptions of the technical effects of the third aspect or the corresponding implementations.

According to a sixth aspect, a sixth communication method is provided. The method may be performed by a second network element, or may be performed by a chip system. The chip system can implement a function of the second network element. The second network element includes, for example, an NEF. The method includes: receiving a third request from an application server, where the third request includes a correspondence between code of a first function, a first DNAI, and second indication information, and the second indication information is used to determine the code of the first function; and sending a fifth request to at least one computing node, where the fifth request includes the code of the first function and the second indication information, the at least one computing node is a computing node corresponding to the first DNAI, the code of the first function is used by the at least one computing node to process a request that is from a terminal device and that is used to access the first function, and the fifth request is sent before the at least one computing node receives the request used to access the first function.

In an optional implementation, the method further includes: sending the first DNAI to an NRF, where the first DNAI is used by the NRF to determine the computing node corresponding to the first DNAI; and receiving information about the at least one computing node from the NRF.

In an optional implementation, the second network element includes an NEF.

In the sixth communication method, the computing node may first obtain the code of the function before receiving the request used to access the function, so that a code download process does not need to be performed after the request is received, for example, a process after code download included in cold start is performed. This greatly shortens a delay of function computing, and improves efficiency of the function computing. In addition, in this embodiment of this application, a process of obtaining the code of the function in advance is decoupled from behavior of the terminal device, so that the code of the function can be obtained earlier. This helps reduce a signaling transmission process in a session establishment process of the terminal device, and improve efficiency of establishing the session by the terminal device.

According to a seventh aspect, a seventh communication method is provided. The method may be performed by a second network element, or may be performed by a chip system. The chip system can implement a function of the second network element. The second network element includes, for example, an NEF. The method includes: receiving a third request from an application server, where the third request includes a correspondence between a first DNAI and second indication information, and the second indication information is used to determine code of a first function; and sending a fifth request to at least one computing node, where the fifth request includes the second indication information, the at least one computing node is a computing node corresponding to the first DNAI, the code of the first function is used by the at least one computing node to process a request that is from a terminal device and that is used to access the first function, and the fifth request is sent before the at least one computing node receives the request used to access the first function.

In an optional implementation, the method further includes: sending the first DNAI to an NRF, where the first DNAI is used by the NRF to determine the computing node corresponding to the first DNAI; and receiving information about the at least one computing node from the NRF.

In an optional implementation, the second network element includes an NEF.

For technical effects achieved by the seventh aspect or the optional implementations, refer to the descriptions of the technical effects of the sixth aspect or the corresponding implementations.

According to an eighth aspect, an eighth communication method is provided. The method may be performed by a second network element, or may be performed by a chip system. The chip system can implement a function of the second network element. The second network element includes, for example, a database. The method includes: receiving a second request from a computing node, where the second request includes second indication information, the second request is used to request code of a first function, and the second request is sent by the computing node in a procedure in which a terminal device requests to establish a session; determining the code of the first function based on the second indication information; and sending the code of the first function to the computing node.

In an optional implementation, the method further includes: receiving a third request from an application server, where the third request includes a correspondence between the code of the first function and the second indication information.

In an optional implementation, the method further includes: sending a response to the third request to the application server, where the response indicates that the correspondence has been successfully received.

For technical effects achieved by the eighth aspect or the optional implementations, refer to one or more of the descriptions of the technical effects of the first aspect or the corresponding implementations to the descriptions of the technical effects of the seventh aspect or the corresponding implementations.

According to a ninth aspect, a communication apparatus is provided. The communication apparatus has a function of implementing behavior in the method embodiment according to any one of the first aspect to the eighth aspect. For beneficial effects, refer to the foregoing descriptions. Details are not described herein again.

The communication apparatus may implement a function of the computing node according to any one of the first aspect to the eighth aspect. For example, the communication apparatus is the computing node according to any one of the first aspect to the eighth aspect, is an electronic device (for example, a chip system) disposed in the computing node, or is a large device including the computing node. The computing node includes a corresponding means (means) or module configured to perform the foregoing method. Alternatively, the communication apparatus may implement a function of the first network element according to any one of the first aspect to the eighth aspect. For example, the communication apparatus may be the first network element according to any one of the first aspect to the eighth aspect, is an electronic device (for example, a chip system) disposed in the first network element, or is a large device including the first network element. The first network element includes a corresponding means or module configured to perform the foregoing method. Alternatively, the communication apparatus may implement a function of the second network element according to any one of the first aspect to the eighth aspect. For example, the communication apparatus may be the second network element according to any one of the first aspect to the eighth aspect, is an electronic device (for example, a chip system) disposed in the second network element, or is a large device including the second network element. The second network element includes a corresponding means or module configured to perform the foregoing method. Alternatively, the communication apparatus may implement a function of the application server according to any one of the first aspect to the eighth aspect. The communication apparatus may be the application server according to any one of the first aspect to the eighth aspect, is an electronic device (for example, a chip system) disposed in the application server, or is a large device including the application server. The application server includes a corresponding means or module configured to perform the foregoing method. For example, the communication apparatus includes a processing unit (or referred to as a processing module sometimes) and a transceiver unit (or referred to as a transceiver module sometimes).

When the communication apparatus can implement a function of the computing node according to any one of the first aspect to the eighth aspect, in an example, the transceiver unit is configured to obtain code of a first function based on a session establishment request of a terminal device; the transceiver unit is further configured to: after obtaining the code of the first function, receive, from the terminal device via a first session, a first request used to access the first function; and the processing unit is configured to run the code of the first function based on first indication information, to process the first request.

Alternatively, when the communication apparatus can implement a function of the computing node according to any one of the first aspect to the eighth aspect, in another example, the transceiver unit is configured to obtain code of a first function based on an indication from an NEF; the transceiver unit is further configured to receive, from a terminal device, a first request used to access the first function, where the first request includes first indication information, and the first indication information includes information used to determine the code of the first function; and the processing unit is configured to run the code of the first function based on first indication information, to process the first request.

When the communication apparatus can implement a function of the first network element according to any one of the first aspect to the eighth aspect, in an example, the transceiver unit is configured to receive a session establishment request from a terminal device, where the session establishment request is used to request to establish a first session, and the first session is used by the terminal device to access a first function; the processing unit is configured to determine a first DNAI corresponding to location information of the terminal device; the processing unit is further configured to determine a first computing node corresponding to the first DNAI, where the first computing node supports the first function; the transceiver unit is further configured to send second indication information to the first computing node, where the second indication information is used to determine code of the first function; and the transceiver unit is further configured to send a session establishment accept message to the terminal device, where the session establishment accept message indicates that the establishment of the first session with the terminal device is completed, the code of the first function is used to process a request that is from the terminal device and that is used to access the first function, and the request used to access the first function is sent by the terminal device after the terminal device receives the session establishment accept message.

Alternatively, when the communication apparatus can implement a function of the first network element according to any one of the first aspect to the eighth aspect, in another example, the transceiver unit is configured to receive a session establishment request from a terminal device, where the session establishment request is used to request to establish a first session, and the first session is used by the terminal device to access a first function; the processing unit is configured to determine a first DNAI corresponding to location information of the terminal device; the processing unit is further configured to determine a first computing node corresponding to the first DNAI, where the first computing node supports the first function; the transceiver unit is further configured to send second indication information and code of the first function to the first computing node, where the second indication information is used to determine the code of the first function; and the transceiver unit is further configured to send a session establishment accept message to the terminal device, where the session establishment accept message indicates that the establishment of the first session with the terminal device is completed, the code of the first function is used to process a request that is from the terminal device and that is used to access the first function, and the request used to access the first function is received after the session establishment accept message is sent.

When the communication apparatus can implement a function of the second network element according to any one of the first aspect to the eighth aspect, in an example, the transceiver unit is configured to receive a second request from a computing node, where the second request includes second indication information, the second request is used to request code of a first function, and the second request is sent by the computing node based on a session establishment request from a terminal device; the processing unit is configured to determine the code of the first function based on the second indication information; and the transceiver unit is further configured to send the code of the first function to the computing node.

Alternatively, when the communication apparatus can implement a function of the second network element according to any one of the first aspect to the eighth aspect, in another example, the transceiver unit is configured to receive a third request from an application server, where the third request includes a correspondence between code of a first function, a first DNAI, and second indication information, and the second indication information is used to determine the code of the first function; and the transceiver unit is further configured to send a fifth request to at least one computing node, where the fifth request includes the code of the first function and the second indication information, the at least one computing node is a computing node corresponding to the first DNAI, the code of the first function is used by the at least one computing node to process a request that is from a terminal device and that is used to access the first function, and the fifth request is sent before the at least one computing node receives the request used to access the first function.

Alternatively, when the communication apparatus can implement a function of the second network element according to any one of the first aspect to the eighth aspect, in still another example, the transceiver unit is configured to receive a third request from an application server, where the third request includes a correspondence between a first DNAI and second indication information, and the second indication information is used to determine the code of the first function; and the transceiver unit is further configured to send a fifth request to at least one computing node, where the fifth request includes the second indication information, the at least one computing node is a computing node corresponding to the first DNAI, the code of the first function is used by the at least one computing node to process a request that is from a terminal device and that is used to access the first function, and the fifth request is sent before the at least one computing node receives the request used to access the first function.

When the communication apparatus can implement a function of the application server according to any one of the first aspect to the eighth aspect, in an example, the transceiver unit is configured to send a third request to a second network element, where the third request includes a correspondence between code of a first function and second indication information, the second indication information is used to determine the code of the first function, the code of the first function is used by a computing node to process a request that is from a terminal device and that is used to access the first function, and the code of the first function is obtained by the computing node before the computing node receives the request used to access the first function.

In an optional implementation, the communication apparatus includes a storage unit. The processing unit can be coupled to the storage unit, and execute a program or instructions in the storage unit, to cause the communication apparatus to perform a function of the foregoing computing node, first network element, second network element, or application server.

In an optional implementation, the communication apparatus includes a processor, coupled to a memory, and configured to execute instructions in the memory, to implement the method performed by the computing node, the first network element, the second network element, or the application server according to any one of the first aspect to the eighth aspect. Optionally, the communication apparatus further includes other components, for example, an antenna, an input/output module, and an interface. Such components may be hardware, software, or a combination of software and hardware.

According to a tenth aspect, a communication apparatus is provided. The communication apparatus may be a computing node, or a chip or a chip system used in the computing node. Alternatively, the communication apparatus may be a first network element, or a chip or a chip system used in the first network element. Alternatively, the communication apparatus may be a second network element, or a chip or a chip system used in the second network element. Alternatively, the communication apparatus may be an application server, or a chip or a chip system used in the application server. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the computing node, the first network element, the second network element, or the application server in any one of the first aspect to the eighth aspect.

According to an eleventh aspect, a computer-readable storage medium is provided. The computer-readable storage medium is configured to store a computer program, and when the computer program is run on a computer, the computer is caused to perform the method according to any one of the first aspect to the eighth aspect.

According to a twelfth aspect, a computer program product is provided. The computer program product includes a computer program, and when the computer program is run on a computer, the computer is caused to perform the method according to any one of the first aspect to the eighth aspect.

According to a thirteenth aspect, a chip system is provided, including a processor and an interface. The processor is configured to invoke instructions from the interface and run the instructions, and when the processor executes the instructions, the method according to any one of the first aspect to the eighth aspect is implemented.

### BRIEF DESCRIPTION OF DRAWINGS

FIG. 1 is a diagram of a cold start process;
FIG. 2A and FIG. 2B are diagrams of two network architectures to which embodiments of this application are applied;
FIG. 3A and FIG. 3B are flowcharts of a communication method according to an embodiment of this application;
FIG. 4 is a diagram in which a same computing task can be deployed on a plurality of computing nodes according to an embodiment of this application;
FIG. 5A, FIG. 5B, FIG. 6A, FIG. 6B, FIG. 7A, FIG. 7B, FIG. 8A, and FIG. 8B are flowcharts of several communication methods according to embodiments of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)", "one or more of", or a similar expression refers to any combination of these items, including a single item (piece) or any combination of a plurality of items (pieces). For example, at least one of a, b, or c, or one or more of a, b, or c, represents a, b, c, a and b, a and c, b and c, or a, b, and c. Each of a, b, or c may be singular or plural.

Ordinal numbers such as "first" and "second" mentioned in embodiments of this application are intended to distinguish between a plurality of objects, but are not intended to limit sizes, content, a sequence, a time sequence, priorities, importance degrees, or the like of the plurality of objects. In addition, step numbers in embodiments described in embodiments of this application are merely intended to distinguish between different steps, but are not intended to limit a sequence of the steps. For example, S501 may be performed before S502, may be performed after S502, or may be simultaneously performed with S502.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, V2X, machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), telemedicine (remote medical), smart grid (smart grid), smart furniture, smart office, smart wearable, smart transportation, smart city (smart city), uncrewed aerial vehicle, and robot. The terminal device may be sometimes referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus, for example, a chip system, that can support the terminal device in implementing the function. The apparatus may be mounted in the terminal device. In the technical solutions provided in embodiments of this application, an example in which the apparatus configured to implement the function of the terminal device is the terminal device is used to describe the technical solutions provided in embodiments of this application. In addition, for ease of description, in embodiments of this application, an example in which the terminal device is the UE is used for description.

(2) A network device in embodiments of this application includes, for example, an access network device and/or a core network device. The access network device is a device with a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), or a subsequent evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks of a same access technology, or may support networks of different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). The following provides descriptions by using an example in which the access network device is the base station. The base station may communicate with the terminal device, or may communicate with the terminal device via the relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is the network device is used to describe the technical solutions provided in embodiments of this application.

FIG. 2A is a diagram of a 5G network architecture based on a service-based architecture. The network architecture is also a network architecture to which embodiments of this application are applied. The 5G network architecture shown in FIG. 2A may include three parts: a UE part, a DN, and an operator network part.

An operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, an SMF network element, a (radio) access network (radio access network, (R)AN), a user plane function (user plane function, UPF) network element, or the like.

The operator network includes a radio access network and a core network. A UE accesses the core network through the (R)AN, and the core network includes a user plane network element and a control plane network element. The user plane network element in the core network includes a UPF. The control plane network element in the core network includes at least one of network elements such as a AUSF, an AMF, an SMF, an NSSF, an NEF, an NRF, a UDM, a PCF, or an AF.

The user plane network element (for example, the UPF) is mainly responsible for forwarding a data packet, controlling quality of service (quality of service, QoS), collecting statistics about charging information, and the like. The control plane network element is mainly responsible for service procedure interaction, and delivering a data packet forwarding policy, a QoS control policy, and the like to a user plane. In embodiments of this application, it is considered that a device like a sensor may access the core network via devices such as the UE and the (R)AN, so that a controller connected to the device like the sensor in industrial Ethernet can perform industrial data communication on the user plane via the UPF.

A control plane of the core network may use the service-based architecture, to be specific, control plane network elements interact with each other in a service invoking mode to replace a point-to-point communication mode in a conventional architecture. In the service-based architecture, a control plane network element exposes a service to another control plane network element for invoking by the another control plane network element; and in point-to-point communication, a set of specific messages exist on a communication interface between the control plane network elements, and can be used only by control plane network elements at two ends of the interface during communication.

Functions of the network elements in the core network are described as follows:

The UPF supports all or some of the following functions: interconnecting a protocol data unit (protocol data unit, PDU) session with a data network; packet routing and forwarding (for example, supporting forwarding of traffic to the data network after performing uplink classifier (uplink classifier) on the traffic, and supporting a branching point (branching point) to support a multi-homed (multi-homed) PDU session); and detecting a data packet.

The AMF performs access management and mobility management on the UE; and is responsible for status maintenance of the UE, reachability management of the UE, forwarding of a non-mobility management (mobility management, MM) non-access-stratum (non-access-stratum, NAS) message, and forwarding of a session management (session management, SM) N2 message.

The SMF performs session management on the UE, and allocates and releases a resource for a session of the UE. The resource includes session quality of service (quality of service, QoS), a session path, a forwarding rule, and the like. The SMF is responsible for selection or reselection of the UPF, and allocation of an internet protocol (Internet protocol, IP) address, and is further responsible for bearer establishment, modification, release, and the like.

The NEF exposes a network function to a third party through a northbound application programming interface (application programming interface, API).

The NRF stores and selects network function entity information for another network element.

The UDM performs user subscription context management, is responsible for managing subscription data of the UE, and is responsible for notifying a corresponding network element when the subscription data is modified.

The UDR performs a unified data repository function, is responsible for storing and retrieving subscription data, policy data, common architecture data, and the like, and may be used by a network element such as the UDM, the PCF, or the NEF to obtain related data. The UDR can provide different data access authentication mechanisms for different types of data (for example, the subscription data and the policy data), to ensure data access security. The UDR needs to return a failure response with an appropriate cause value for an invalid service operation or data access request.

The PCF performs user policy management, and is configured to: generate and manage users, sessions, and QoS flow handling policies.

The AF performs application management, and provides an application layer service for the UE. When providing the service for the UE, the AF has requirements on a QoS (policy (policy)) and a charging (charging) policy, and needs to notify a network. In addition, the AF also needs the core network to feed back application-related information.

Related interfaces between the network element functions in embodiments of this application include:
N1: is an interface between the UE and the control plane of the core network.
N2: is a communication interface between the (R)AN and the control plane of the core network.
N3: is a communication interface between the (R)AN and the UPF, and is configured to transmit user plane data.
N4: is a communication interface between the SMF and the UPF, and is used by the SMF to perform policy configuration and the like on the UPF.
N6: is a communication port between the UPF and the DN.

FIG. 2B is a diagram of a 5G network architecture based on a point-to-point interface. The network architecture is another network architecture to which embodiments of this application are applied. For network elements in FIG. 2B, refer to the descriptions of the related network elements in FIG. 2A. A main difference between FIG. 2B and FIG. 2A lies in that interfaces between the network elements in FIG. 2B are point-to-point interfaces instead of service-based interfaces.

The following describes, with reference to the accompanying drawings, methods provided in embodiments of this application. In embodiments of this specification, one computing task may correspond to one or more functions, or it is understood as that to execute the computing task, the one or more functions corresponding to the computing task need to be executed. One function may correspond to one set of code, the set of code may also be understood as one code package, and one set of code corresponding to one function may be referred to as code of the function. In embodiments of this specification, a computing management function (computing management function, CMF) is, for example, a newly added network element (not shown in FIG. 2A and FIG. 2B) in the core network, and is responsible for selection or reselection of a UPF; the CMF may be an SMF or an AMF to which a computing function is added; the CMF may be a module in an SMF or an AMF; or the CMF may have functions of both an SMF and an AMF, which may be understood as that the CMF may be used to replace the SMF and the AMF.

Embodiments of this specification may be applied to the network architecture shown in FIG. 2A or FIG. 2B. For example, a computing node in embodiments of this specification may be the UPF in FIG. 2A or FIG. 2B, or may be a server not shown in FIG. 2A or FIG. 2B. A first network element in embodiments of this specification may be the UPF or the NEF in FIG. 2A or FIG. 2B, or may be a CMF not shown in FIG. 2A or FIG. 2B. A second network element in embodiments of this specification may be the PCF or the NEF in FIG. 2A or FIG. 2B, or may be a database not shown in FIG. 2A or FIG. 2B. Optionally, the database may also be referred to as a computing function code hosting database, a function code database, or the like, and is, for example, a newly added network element in the core network; or may be implemented via the UDR. An AF described in embodiments of this specification may be the AF in FIG. 2A or FIG. 2B. In the accompanying drawings corresponding to embodiments of this application, all steps represented by dashed lines are optional steps.

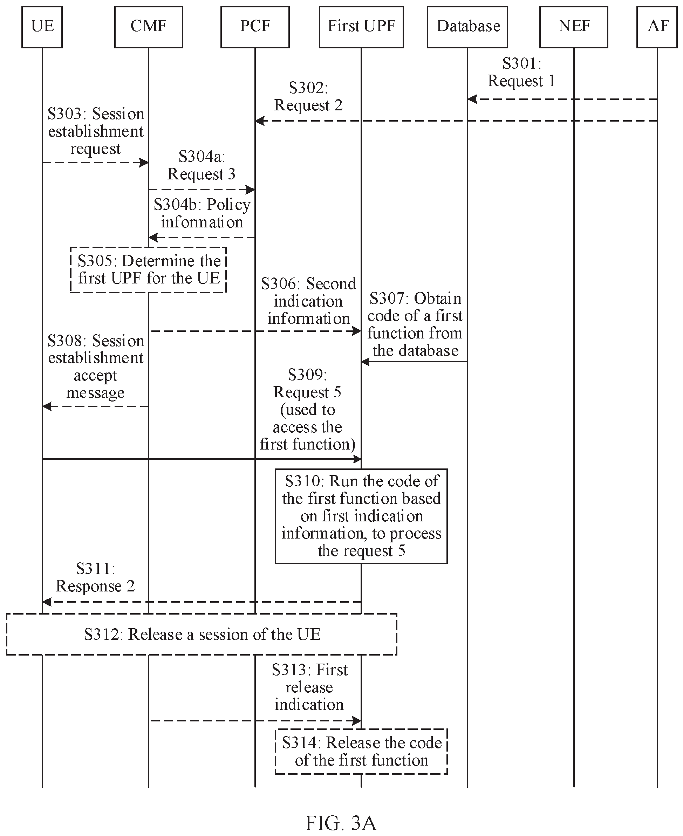

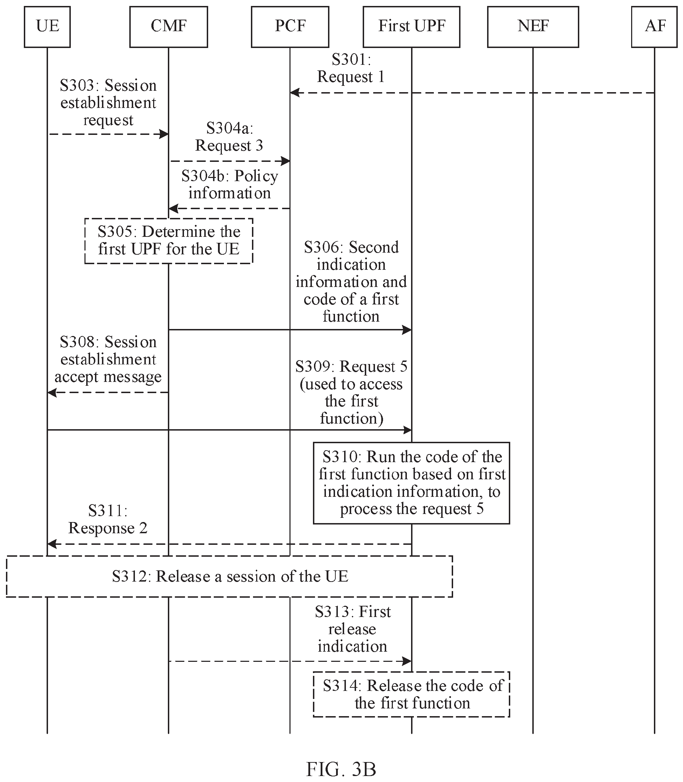

An embodiment of this application provides a first communication method. FIG. 3A or FIG. 3B is a flowchart of the method. In the embodiment shown in FIG. 3A or FIG. 3B, an example in which a computing node is a UPF, a second network element is a database or a PCF, and a first network element is a CMF is used.

S301: An AF sends a request 1 to the second network element. Correspondingly, the second network element receives the request 1 from the AF. The request 1 may also be referred to as a third request. For example, the request 1 is an AF request (AF request), or the request 1 is included in the AF request.

The request 1 may include a correspondence (or an association relationship) between code of at least one function and at least one piece of indication information. The function (or the code of the function) may be in one-to-one correspondence with the indication information, and one piece of indication information may be used to determine corresponding code of a function. For example, indication information corresponding to a first function (or code of a first function) is second indication information, and the request 1 may include a correspondence between the code of the first function and the second indication information (that is, the code of the at least one function includes the code of the first function, and the at least one piece of indication information includes the second indication information). In this case, the second indication information may be used to determine the code of the first function. For example, if the code of the first function needs to be queried, the code of the first function may be queried via the second indication information. Optionally, for example, if the function is an HTTP function, indication information corresponding to the HTTP function (or code of the function) may be a uniform resource locator (uniform resource locator, URL) used to call the function, and the indication information may also be referred to as a trigger or the like. Alternatively, the second network element may obtain the correspondence between the code of the at least one function and the at least one piece of indication information in another manner. Therefore, S301 is an optional step.

Optionally, if the second network element is the database (this is used as an example in FIG. 3A), the request 1 may be used to store the correspondence between the code of the at least one function and the at least one piece of indication information in the database. After receiving the request 1, the database may reply to the AF with response information, for example, referred to as a response 1. The response 1 may also be referred to as computing function hosting response information or the like; and may indicate that the request 1 is successfully received, indicate that the correspondence is successfully stored, or the like. The AF may directly send the request 1 to the database, or may send the request 1 to the database via an NEF.

Alternatively, if the second network element is the PCF (this is used as an example in FIG. 3B), the correspondence included in the request 1 may specifically include a correspondence between the code of the at least one function, the at least one piece of indication information, and at least one piece of location information. The location information may be a deployment location of a function corresponding to the code of the at least one function. For example, one piece of location information may be represented by using one data network access identifier (data network access identifier, DNAI). In other words, the correspondence may be a correspondence between the code of the at least one function, the at least one piece of indication information, and at least one DNAI. The code of the at least one function includes the code of the first function, the at least one piece of indication information includes the second indication information, and the at least one DNAI includes one or more DNAIs corresponding to the code of the first function and the second indication information. That code of a function corresponds to a DNAI means that the function (or a computing task to which the function belongs) is deployed in the DNAI, is deployed on a computing node corresponding to the DNAI, is deployed in an area (or a network) indicated by the DNAI, or is deployed on a computing node in the area (or the network) indicated by the DNAI. When the second network element is the PCF, the AF does not need to store the code of the function in the database, so that this network element, namely, the database does not need to be used, thereby reducing an interaction process between the network elements.

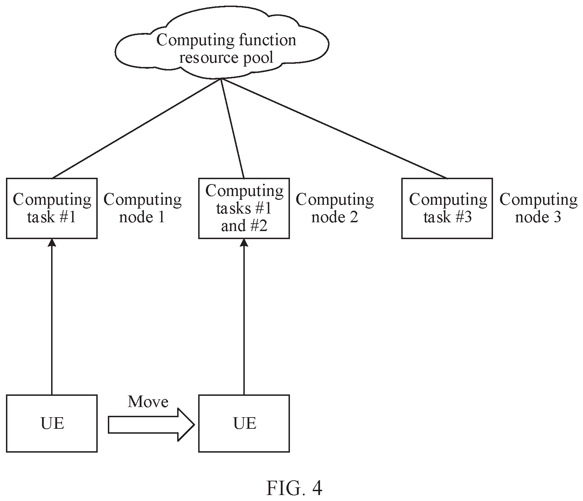

For future computing-network integration, there are a large quantity of computing nodes deployed in a distributed manner, there are numerous future computing tasks, and a UE randomly triggers the computing tasks. In addition, considering mobility of the UE, when the UE that requests a same computing task is at different locations, a network may select different computing nodes, in other words, the same computing task may be deployed on a plurality of computing nodes. For example, refer to FIG. 4. A computing task #1 is deployed on both a computing node 1 and a computing node 2. When a UE is at a location 1, a network may select the computing node 1 for the UE; and when the UE moves from the location 1 to a location 2, the network may reselect the computing node 2 for the UE. Therefore, in the request 1, there may be one or more DNAIs corresponding to code of one function (or code of one function and one piece of indication information), in other words, one function (or a computing task to which the function belongs) may be deployed on a computing node corresponding to an area indicated by one or more DNAIs. For example, in the correspondence, the DNAI corresponding to the code of the first function and the second indication information is a first DNAI, and the first DNAI may include one or more DNAIs. In embodiments of this application, "selecting" a computing node may alternatively be replaced with "determining" a computing node.

Optionally, if the second network element is the PCF, the request 1 may further include a data network name (data network name, DNN), single network slice selection assistance information (single network slice selection assistance information, S-NSSAI), or the like. This is not limited.

If the second network element is the database, optionally, the method may further include S302 shown in FIG. 3A: The AF sends a request 2 to the PCF. Correspondingly, the PCF receives the request 2 from the AF. The request 2 may also be referred to as a fourth request. The request 2 may include a correspondence between at least one piece of indication information and at least one piece of location information. The at least one piece of indication information includes second indication information, and the at least one piece of location information includes one or more DNAIs corresponding to the second indication information. For the correspondence, refer to the foregoing descriptions.

Regardless of whether the second network element is the database or the PCF, optionally, the method may further include S303 shown in FIG. 3A or FIG. 3B. S303 may be performed after S301, or may be performed after S302. In S303, the UE initiates a session establishment procedure. An implementation includes: The UE directly sends a session establishment request message to the CMF via an access network device, to indicate that the UE initiates the session establishment procedure. Alternatively, another implementation includes: The UE sends a session establishment request message to an SMF via an access network device, to indicate that the UE initiates the session establishment procedure; and the SMF determines, based on information such as a DNN or S-NSSAI included in the session establishment request message, that a first session needs to be processed by the CMF, and further, the SMF sends the session establishment request message to the CMF. A session that the UE requests to establish is, for example, referred to as the first session. The first session is, for example, a PDU session, or may be a session of another type. Optionally, the session establishment request message may carry the DNN, the S-NSSAI, or the like associated with the PDU session.

Optionally, the method may further include S304 shown in FIG. 3A or FIG. 3B: The CMF receives policy information from the PCF. For example, S304 may include S304a and S304b. In S304a, the CMF may send, to the PCF, a request, for example, referred to as a request 3, where the request 3 may be used to request the policy information; and after receiving the request 3, the PCF may send the policy information to the CMF in S304b. For example, the request 3 is a service-based message, for example, Npcf_session management policy control (SMPolicyControl) _create request (create request); and the PCF may send the policy information to the CMF via an Npcf_SMPolicyControl_create response (Create response). If the second network element is the database, the policy information may include a correspondence between the at least one piece of indication information and the at least one DNAI that is received by the PCF from the AF; or if the second network element is the PCF, the policy information may include the correspondence between the code of the at least one function, the at least one piece of indication information, and the at least one DNAI that is received by the PCF from the AF.

Optionally, after receiving the policy information, the CMF may perform S305 shown in FIG. 3A or FIG. 3B. In S305, the CMF determines a UPF for the UE. For example, the CMF may determine, based on current location information of the UE, a DNAI that can be accessed by the UE, and the CMF can determine, based on the policy information, whether a computing task is deployed on a computing node corresponding to an area indicated by the DNAI, so that the CMF can select an appropriate UPF for the UE depending on whether the computing task is deployed on the computing node corresponding to the area indicated by the DNAI. In this embodiment of this application, the UPF is a computing node on which a computing task is deployed. For example, if the CMF determines that current location information of the UE corresponds to the first DNAI (or the CMF determines that the UE can access the first DNAI at current location information), and the CMF determines that a computing task is deployed in an area indicated by the first DNAI, the CMF may select a computing node that corresponds to the first DNAI and on which the computing task is deployed. For example, the CMF determines a first computing node. For example, the first computing node supports the first function, or a computing task to which the first function belongs is deployed on the first computing node. In this embodiment of this application, the first computing node is, for example, a first UPF.

If the policy information includes a correspondence between at least one piece of indication information and at least one DNAI that is received by the PCF from the AF, the at least one piece of indication information may include second indication information, and the at least one DNAI may include a first DNAI corresponding to the second indication information; or if the policy information may include a correspondence between code of at least one function, at least one piece of indication information, and at least one DNAI that is received by the PCF from the AF, the at least one piece of indication information may include second indication information, the at least one DNAI may include a first DNAI corresponding to the second indication information, and the code of the at least one function may include code of a first function corresponding to the second indication information. After the first UPF is determined, optionally, the method may further include S306 shown in FIG. 3A or FIG. 3B. In S306, the CMF sends the second indication information to the first UPF. Correspondingly, the first UPF receives the second indication information from the CMF, as shown in FIG. 3A. Alternatively, in S306, the CMF sends the second indication information and the code of the first function to the first UPF. Correspondingly, the first UPF receives the second indication information and the code of the first function from the CMF. As shown in FIG. 3B, this manner may be understood as that the first UPF obtains the code of the first function based on the session establishment request message from the UE (or based on the procedure of establishing the first session). S306 in FIG. 3A or FIG. 3B may be understood as being performed in the procedure of establishing the first session. Both the second indication information and the code of the first function are obtained by the CMF from the policy information. Because the first UPF supports the first function, the CMF may send, to the first UPF, the second indication information corresponding to the code of the first function. If the policy information obtained by the CMF includes the correspondence between the at least one piece of indication information and the at least one DNAI, in S306, the CMF may send the second indication information to the first UPF, but does not send the code of the first function; or if the policy information obtained by the CMF includes the correspondence between the code of the at least one function, the at least one piece of indication information, and the at least one DNAI, in S306, the CMF may send the second indication information and the code of the first function to the first UPF. Optionally, the CMF may perform S306 in a process of establishing an N4 session (N4 session) with the first UPF. For example, in S306, the CMF may send, to the first UPF, a message used to request to establish the N4 session, where the message may include the second indication information, or includes the second indication information and the code of the first function.

If the CMF sends the second indication information and the code of the first function to the first UPF in S306, the first UPF has obtained the code of the first function, and the first UPF may store the second indication information and the code of the first function. Alternatively, if the CMF sends the second indication information to the first UPF but does not send the code of the first function in S306, the first UPF may further obtain the code of the first function based on the second indication information. In this case, the second indication information from the CMF may be considered as being used to trigger the obtaining of the code of the first function. This manner may also be understood as that the first UPF obtains the code of the first function based on the session establishment request message from the UE (or based on the procedure of establishing the first session). If the CMF sends the second indication information to the first UPF but does not send the code of the first function in S306, the method may further include S307 shown in FIG. 3A: The first UPF obtains the code of the first function from the database. S307 is also performed in the procedure in which the UE requests to establish the session, or is performed in the procedure of establishing the first session. After the first UPF receives the second indication information, if the first UPF has stored the code of the first function (for example, the first UPF has obtained the code of the first function in a session establishment process of another UE), S307 does not need to be performed; or if the first UPF has not stored the code of the first function, S307 may be performed. For example, in S307, the first UPF may send a request 4 to the database. Correspondingly, the database receives the request 4 from the first UPF. The request 4 may also be referred to as a second request. The request 4 may be used to request the code of the first function. For example, the request 4 includes the second indication information, and the database may determine the code of the first function based on the second indication information. In addition, in S307, the database may send the code of the first function to the first UPF. In this way, the first UPF obtains the code of the first function.

Optionally, after obtaining the code of the first function through S306 or S307, the first UPF may store a correspondence (or an association relationship) between the code of the first function and information about the UE. For example, if the first UPF obtains the code of the first function in the session establishment process of the UE, provided that the first UPF receives the second indication information in a session establishment process of a UE, the first UPF may establish a correspondence between information about the UE and the code of the first function. For example, there may be a correspondence between the code of the first function and information about one or more UEs. Optionally, information about a UE may include one or more of the following: an identity of the UE (for example, an identity (ID) of the UE), address information of the UE (for example, an IP address of the UE), or an identifier of a session corresponding to the UE (for example, an ID of an N4 session corresponding to the UE). A correspondence between code of a function and information about a UE may indicate that there is a session used by the UE to access the function. Therefore, the correspondence between the information about the UE and the code of the first function is established, so that the first UPF can know a quantity of UEs that request to access the first function, or the first UPF can know whether a UE currently requests to access the first function.

Optionally, the method may further include S308 shown in FIG. 3A or FIG. 3B: The CMF sends a session establishment accept message to the UE. After the establishment of the first session of the UE is completed, the CMF may send the session establishment accept message to the UE.

After S308, the method may further include S309 shown in FIG. 3A or FIG. 3B: The UE sends a request 5 to the first UPF. Correspondingly, the first UPF receives the request 5 from the UE. The UE may send the request 5 to the first UPF via the established first session, or the first UPF may receive the request 5 via the first session. For example, it is understood as that after obtaining the code of the first function, the first UPF receives the request 5 via the first session. In this embodiment of this application, because the first UPF is the computing node, the request 5 may be sent to the first UPF. The request 5 may also be referred to as a first request. The request 5 may be used to access the first function, or is used to request to execute the computing task to which the first function belongs. For example, the request 5 is an HTTP request. The request 5 includes, for example, first indication information, and the first indication information may be used to determine the code of the first function. Optionally, the first indication information and the second indication information may be same information, for example, both are URLs corresponding to the code of the first function, but sources of the two pieces of indication information are different (the first indication information is from the UE, and the second indication information is from the AF). Therefore, the two pieces of indication information are named separately.

After receiving the request 5, the first UPF may perform S310 shown in FIG. 3A or FIG. 3B, and run the code of the first function based on the first indication information, to process the request 5. After receiving the request 5, the first UPF may call the code of the first function based on the first indication information, to execute the first function or execute the computing task to which the first function belongs. For example, after receiving the request 5, the first UPF may perform steps such as function instance container startup, runtime initialization, and code initialization that are included in a cold start process shown in FIG. 1 (where a code download step included in the cold start process shown in FIG. 1 has been completed). After cold start is completed, and a function instance is ready, the first UPF may start to execute the request 5.

Optionally, the method may further include S311 shown in FIG. 3A or FIG. 3B: The first UPF sends, to the UE, response information, for example, referred to as a response 2. Correspondingly, the UE receives the response 2 from the first UPF. The response 2 is, for example, HTTP response information, and may be a response to the request 5. For example, the response 2 includes a result of processing the first function (or the computing task to which the first function belongs) by the first UPF.

According to the method described above, the first UPF stores the code of the first function. If no UE requests to access the first function, the first UPF may alternatively release the code of the first function, to save storage space of the first UPF. Optionally, the method may further include S312 and S313 shown in FIG. 3A or FIG. 3B. In S312, the first session of the UE is released. For example, the UE or a network side may trigger the release of the first session of the UE. In S313, the CMF sends a first release indication to the first UPF. Correspondingly, the first UPF receives the first release indication from the CMF. The first release indication may indicate to release the first session of the UE.

Optionally, the method may further include S314 shown in FIG. 3A or FIG. 3B: The first UPF releases the code of the first function. For example, S314 is performed after S313. For example, after receiving the first release indication, the first UPF may determine whether there is still a session used to access the first function. If there is still the session used to access the first function, the first UPF does not need to release the code of the first function, but may continue to store the code of the first function; or if there is no session used to access the first function, the first UPF may release the code of the first function. If a session used by a UE to access the first function is not released, it indicates that the UE further needs to access the first function, or it indicates that there is still a session used to access the first function; or if a session used by a UE to access the first function is released, it indicates that the UE no longer accesses the first function, or it indicates that the UE does not have a session used to access the first function. However, one or more UEs may all establish a session used to access the first function. Therefore, only when all sessions used by these UEs to access the first function are released, it is considered that there is no session used to access the first function.

For example, after receiving the first release indication, the first UPF may delete the correspondence between the code of the first function and the information about the UE from the correspondence between the code of the first function and the information about the UE. After the deletion, the first UPF may determine whether information about a UE still corresponds to the code of the first function. If information about another UE still corresponds to the code of the first function, it indicates that there is still a session used to access the first function, and the first UPF does not release the code of the first function; or if no information about another UE corresponds to the code of the first function, it indicates that there is no session used to access the first function, and the first UPF may release the code of the first function. It can be learned that the correspondence between the code of the function and the information about the UE is established, so that the first UPF can determine whether it is necessary to store the code of the first function, to release the code of the first function on an appropriate occasion. This does not affect the access of the UE to the first function, and can also release the information stored in the first UPF in time, thereby saving storage space of the first UPF. In embodiments of this application, "releasing" the code of the function may alternatively be replaced with "deleting" the code of the function, for example, may be described as "releasing the code of the first function", or may be described as "deleting the code of the first function". "Releasing" the code of the function and "deleting" the code of the function may be considered as equivalent features, and may be replaced with each other.

In this embodiment of this application, the first UPF may first obtain the code of the first function before receiving the first request from the UE. This is equivalent to that the first UPF first obtains the code of the first function before receiving the request used to access the first function, so that a code download process does not need to be performed after the first request is received, for example, a process after code download included in the cold start is performed. This greatly shortens a delay of function computing, and improves efficiency of the function computing.

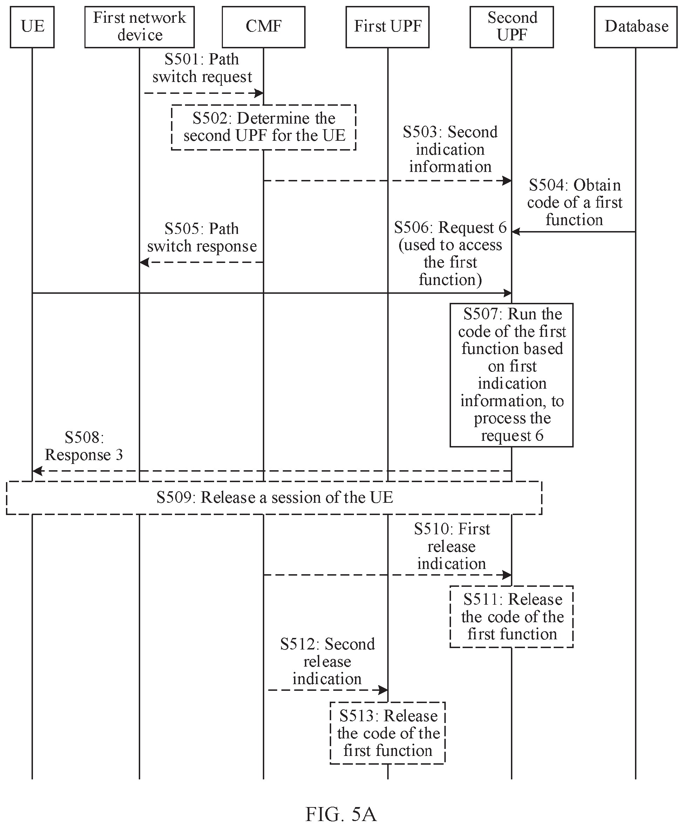

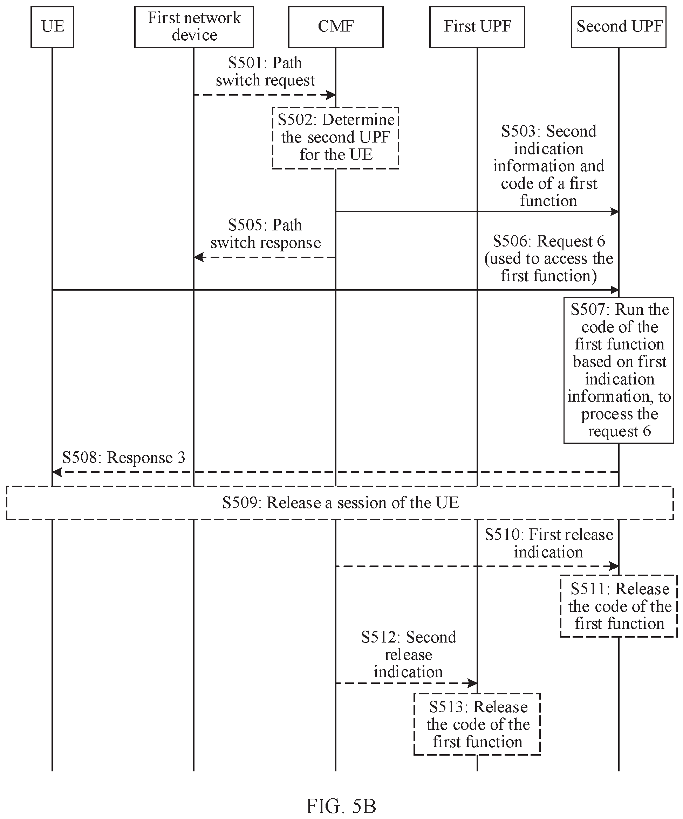

The embodiment shown in FIG. 3A or FIG. 3B relates to a scenario in which the UE does not move. In addition, the UE may alternatively move. When the UE moves from an original location to a new location, if a computing node corresponding to the new location does not store the code of the first function, the computing node still needs to download the code of the first function, which is time-consuming. Therefore, an embodiment of this application provides a second communication method. According to the method, a delay of function computing can also be shortened even if the UE moves. FIG. 5A or FIG. 5B is a flowchart of the method. In the embodiment shown in FIG. 5A or FIG. 5B, an example in which a computing node is a UPF, a second network element is a database or a PCF, and a first network element is a CMF is still used. A first UPF is a UPF that provides a service for a UE before the UE moves, and a second UPF is a UPF that provides a service for the UE after the UE moves.

S501: A first network device sends a path switch request to the CMF. Correspondingly, the CMF receives the path switch request from the first network device. The first network device is, for example, an access network device, is referred to as a first access network device, and may be a target access network device after the UE moves. In addition, there is further a second network device, which is a network device that serves the UE before the UE moves. For example, the second network device is an access network device, and is referred to as a second access network device. The path switch request may be used to request to switch a transmission path of the UE to the first network device. In other words, after the UE moves, the target access network device of the UE may send the path switch request to the CMF.

Before S501, S301 to S311 in the embodiment shown in FIG. 3A or FIG. 3B may be performed. Details are not described again.

S502: The CMF determines the second UPF for the UE. For example, when a UE moves from the second network device to the first network device (for example, when the CMF receives the path switch request from the first network device), the CMF may determine, based on current location information of the UE, a DNAI that can be accessed by the UE, for example, a second DNAI, and the CMF can determine, based on policy information, whether a computing task is deployed on a computing node corresponding to an area indicated by the second DNAI, so that the CMF can select an appropriate UPF for the UE depending on whether the computing task is deployed on the computing node corresponding to the area indicated by the second DNAI, for example, the CMF selects the second UPF. In this embodiment of this application, the second UPF is a new computing node on which a first function (or a computing task to which the first function belongs) is deployed. For a process of selecting (or determining) the second UPF, refer to S305 in the embodiment shown in FIG. 3A or FIG. 3B.

S503: The CMF sends second indication information to the second UPF. Correspondingly, the second UPF receives the second indication information from the CMF. Refer to FIG. 5A. Alternatively, S503 may be replaced as follows: The CMF sends second indication information and code of the first function to the second UPF. Correspondingly, the second UPF receives the second indication information and the code of the first function from the CMF. Refer to FIG. 5B.

Because the second UPF supports the first function, the CMF may send, to the second UPF, the second indication information corresponding to the code of the first function. If the CMF performs the embodiment shown in FIG. 3A, the policy information obtained by the CMF includes a correspondence between at least one piece of indication information and at least one DNAI. For example, the at least one piece of indication information includes the second indication information, and the at least one DNAI includes the second DNAI corresponding to the second indication information. In this case, in S503, the CMF may send the second indication information to the second UPF, but does not send the code of the first function.

Alternatively, if the CMF performs the embodiment shown in FIG. 3B, the policy information obtained by the CMF includes a correspondence between code of at least one function, at least one piece of indication information, and at least one DNAI, where for example, the at least one piece of indication information includes the second indication information, the at least one DNAI includes the second DNAI corresponding to the second indication information, and the code of the at least one function includes the code of the first function corresponding to the second indication information. In this case, in S503, the CMF may send the second indication information and the code of the first function to the second UPF. For content such as these correspondences, refer to the descriptions of the embodiment shown in FIG. 3A or FIG. 3B.

Optionally, the CMF may perform S503 in a process of establishing an N4 session with the second UPF. For example, in S503 in FIG. 5A or FIG. 5B, the CMF may send, to the second UPF, a message used to request to establish the N4 session, where the message may include the second indication information, or includes the second indication information and the code of the first function.

If the CMF sends the second indication information and the code of the first function to the second UPF in S503 (refer to FIG. 5B), the second UPF has obtained the code of the first function, and the second UPF may store the second indication information and the code of the first function. Alternatively, if the CMF sends the second indication information to the second UPF in S503 but does not send the code of the first function (refer to FIG. 5A), the second UPF may further obtain the code of the first function based on the second indication information (for example, may obtain the code of the first function based on S504 in FIG. 5A, where for S504, refer to S307 in the embodiment shown in FIG. 3A). In this case, the second indication information from the CMF may be considered as being used to trigger the obtaining of the code of the first function. For more descriptions of this part of content, refer to S306 and S307 in the embodiment shown in FIG. 3A.

Optionally, after obtaining the code of the first function through S503 or S504, the second UPF may store a correspondence (or an association relationship) between the code of the first function and information about the UE. For this part of content, refer to the embodiment shown in FIG. 3A or FIG. 3B.

In addition, when selecting the second UPF as the new computing node for the UE, the CMF may further trigger the first UPF to migrate context information of the UE to the second UPF. For example, the CMF sends a context migration request to the first UPF, where the context migration request may carry an IP address of the UE and an IP address of the second UPF. After receiving the context migration request, the first UPF may send status information of the computing task of the UE to the second UPF. For example, the first UPF may send the context information of the UE to the second UPF, where the context information of the UE may include the status information of the computing task of the UE.

Optionally, the method may further include S505 shown in FIG. 5A or FIG. 5B: The CMF sends a path switch response to the first network device. Correspondingly, the first network device receives the path switch response from the CMF. The path switch response may indicate that the path switch succeeds.

The method may further include S506 shown in FIG. 5A or FIG. 5B: The UE sends a request 6 to the second UPF. Correspondingly, the second UPF receives the request 6 from the UE. In this embodiment of this application, because the second UPF is the computing node, the request 6 may be sent to the second UPF. The request 6 may be used to access the first function, or is used to request to execute the computing task to which the first function belongs. For example, the request 6 is an HTTP request. The request 6 includes, for example, first indication information, and the first indication information may be used to determine the code of the first function. Optionally, the first indication information and the second indication information may be same information, for example, both are URLs corresponding to the code of the first function.

After receiving the request 6, the second UPF may perform S507 shown in FIG. 5A or FIG. 5B, and run the code of the first function based on the first indication information, to process the request 6. After receiving the request 6, the second UPF may call the code of the first function based on the first indication information, to execute the first function or execute the computing task to which the first function belongs. For example, after receiving the request 6, the second UPF may perform steps such as function instance container startup, runtime initialization, and code initialization that are included in a cold start process shown in FIG. 1 (where a code download step included in the cold start process shown in FIG. 1 has been completed). After cold start is completed, and a function instance is ready, the second UPF may start to execute the request 6.

Optionally, the method may further include S508 shown in FIG. 5A or FIG. 5B: The second UPF sends, to the UE, response information, for example, referred to as a response 3. Correspondingly, the UE receives the response 3 from the second UPF. The response 3 is, for example, HTTP response information, and may be a response to the request 6. For example, the response 3 includes a result of processing the first function (or the computing task to which the first function belongs) by the second UPF.

According to the method described above, the second UPF stores the code of the first function. If no UE requests to access the first function, the first UPF may alternatively release the code of the first function, to save storage space of the second UPF. Optionally, the method may further include S509 and S510 shown in FIG. 5A or FIG. 5B. In S509, the first session of the UE is released. For example, the UE or a network side may trigger the release of the first session of the UE. In S510, the CMF sends a first release indication to the first UPF. Correspondingly, the first UPF receives the first release indication from the CMF. The first release indication may indicate to release the first session of the UE.

Optionally, the method may further include S511 shown in FIG. 5A or FIG. 5B: The second UPF releases the code of the first function. For example, S511 is performed after S510. For more content of S511, refer to S314 in the embodiment shown in FIG. 3A or FIG. 3B.

In addition, the session of the UE has been switched to the second UPF, and the first UPF no longer maintains the session of the UE. Therefore, optionally, the method may further include S512 shown in FIG. 5A or FIG. 5B: The CMF sends a second release indication to the first UPF. Correspondingly, the first UPF receives the second release indication from the CMF. For example S512 is performed after S505. The second release indication may indicate to release an N4 session between the CMF and the UE. For example, the second release indication carries an identifier of the N4 session. After receiving the second release indication, the first UPF may release the N4 session. In addition, optionally, the method may further include S513 shown in FIG. 5A or FIG. 5B: The first UPF releases the code of the first function. For example, the first UPF may release the code of the first function when there is no session used to access the first function. For this process, refer to S314 in the embodiment shown in FIG. 3A or FIG. 3B.

In this embodiment of this application, even in a scenario in which the UE moves, the new UPF may also first obtain the code of the first function before receiving the request used to access the first function, so that a code download process does not need to be performed after the request is received, for example, a process after code download included in the cold start is performed. This greatly shortens a delay of function computing, and improves efficiency of the function computing.

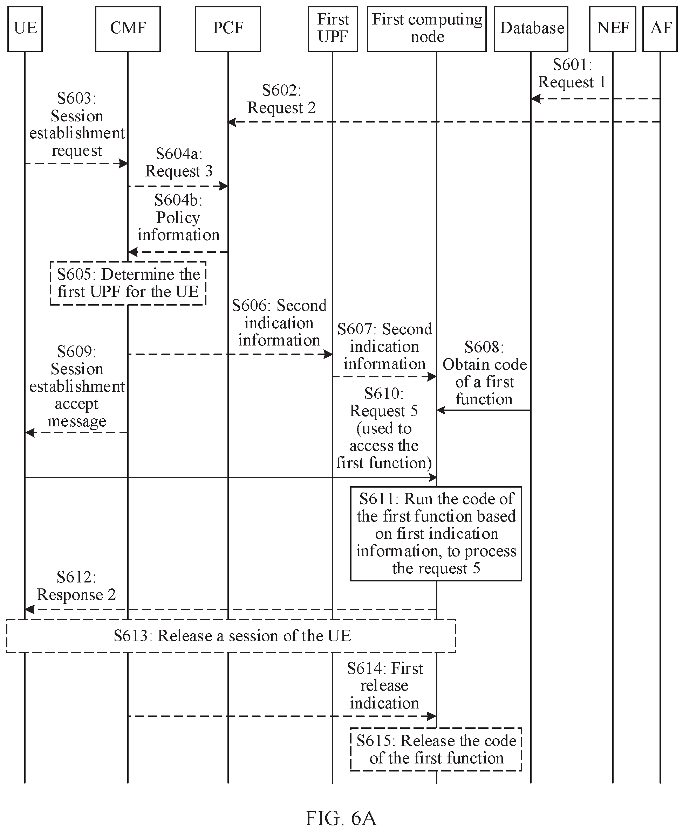

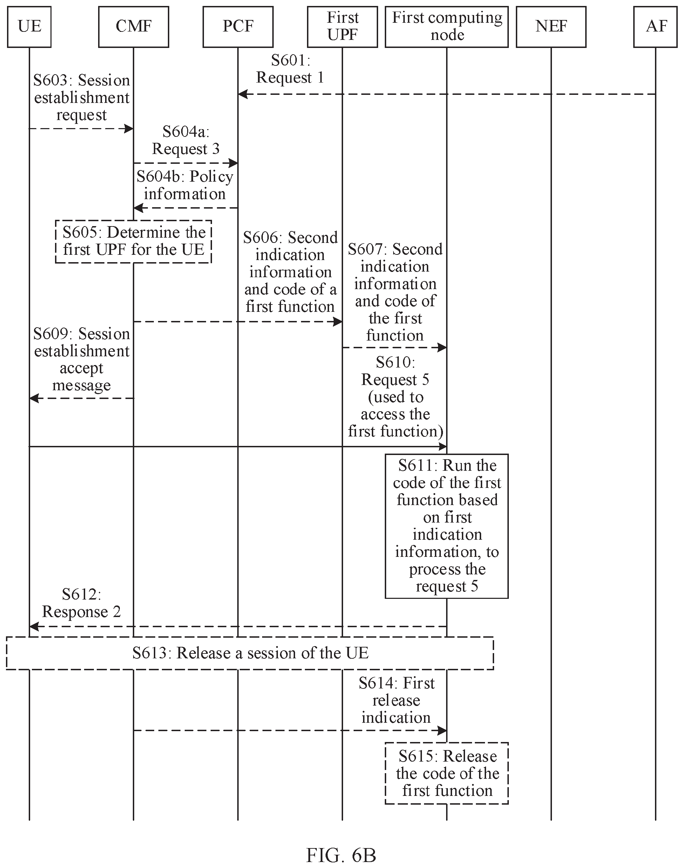

In the embodiment shown in any one of FIG. 3A, FIG. 3B, FIG. 5A, or FIG. 5B, the computing node is the UPF. In addition, the computing node may not be the UPF, but a server used for computing or the like. For example, the computing node is connected to the UPF through an N6 interface. In this scenario, the computing node is decoupled from the UPF, or it is understood that the computing node is loosely coupled to the UPF. Therefore, an embodiment of this application provides a third communication method. In the method, a computing node is not a UPF, but a delay of function computing can also be shortened. FIG. 6A or FIG. 6B is a flowchart of the method. In the embodiment shown in FIG. 6A or FIG. 6B, an example in which a computing node is not a UPF, a second network element is a database or a PCF, and a first network element is a CMF is used.

S601: An AF sends a request 1 to the second network element. Correspondingly, the second network element receives the request 1 from the AF. The request 1 may also be referred to as a third request.

The request 1 may include a correspondence (or an association relationship) between code of at least one function and at least one piece of indication information. The function (or the code of the function) may be in one-to-one correspondence with the indication information, and one piece of indication information may be used to determine corresponding code of a function. For example, indication information corresponding to a first function (or code of a first function) is second indication information, and the request 1 may include a correspondence between the code of the first function and the second indication information (that is, the code of the at least one function includes the code of the first function, and the at least one piece of indication information includes the second indication information). In this case, the second indication information may be used to determine the code of the first function.

Optionally, if the second network element is the database (refer to FIG. 6A), the request 1 may be used to store the correspondence between the code of the at least one function and the at least one piece of indication information in the database. After receiving the request 1, the database may reply to the AF with response information, for example, referred to as a response 1. The response 1 may indicate that the request 1 is successfully received, indicate that the correspondence is successfully stored, or the like.

Alternatively, if the second network element is the PCF (refer to FIG. 6B), the correspondence included in the request 1 may specifically include a correspondence between the code of the at least one function, the at least one piece of indication information, and at least one piece of location information. The location information may be a deployment location of a function corresponding to the code of the at least one function. For example, one piece of location information may be represented by using one DNAI. In other words, the correspondence may be a correspondence between the code of the at least one function, the at least one piece of indication information, and at least one DNAI. The code of the at least one function includes the code of the first function, the at least one piece of indication information includes the second indication information, and the at least one DNAI includes one or more DNAIs corresponding to the code of the first function and the second indication information.

Optionally, if the second network element is the PCF, the request 1 may further include a DNN, S-NSSAI, or the like. This is not limited.

For more content of S601, refer to S301 in the embodiment shown in FIG. 3A or FIG. 3B.

If the second network element is the database, optionally, the method may further include S602 shown in FIG. 6A: The AF sends a request 2 to the PCF. Correspondingly, the PCF receives the request 2 from the AF. The request 2 may also be referred to as a fourth request. The request 2 may include a correspondence between at least one piece of indication information and at least one piece of location information. The at least one piece of indication information includes second indication information, and the at least one piece of location information includes one or more DNAIs corresponding to the second indication information. For the correspondence, refer to the foregoing descriptions.

Regardless of whether the second network element is the database or the PCF, optionally, the method may further include S603 shown in FIG. 6A or FIG. 6B. S603 may be performed after S601, or may be performed after S602. In S603, a UE initiates a session establishment procedure. For example, if the UE sends a session establishment request message to the CMF, it indicates that the UE initiates a session establishment procedure. A session is, for example, referred to as a first session. The first session is, for example, a PDU session, or may be a session of another type. Optionally, the session establishment request message may carry the DNN, the S-NSSAI, or the like corresponding to a location of the UE.

Optionally, the method may further include S604 shown in FIG. 6A or FIG. 6B: The CMF receives policy information from the PCF. For example, S604 may include S604a and S604b. In S604a, the CMF may send, to the PCF, a request, for example, referred to as a request 3, where the request 3 may be used to request the policy information; and after receiving the request 3, the PCF may send the policy information to the CMF in S604b. For more descriptions of S604, refer to S304 in the embodiment shown in FIG. 3A or FIG. 3B.

Optionally, after receiving the policy information, the CMF may perform S605 shown in FIG. 6A or FIG. 6B. In S605, the CMF determines a UPF for the UE. For example, if the CMF determines that current location information of the UE corresponds to a first DNAI (or the CMF determines that the UE can access a first DNAI at current location information), and the CMF determines that a computing task is deployed in an area indicated by the first DNAI, the CMF may select a UPF corresponding to the first DNAI, for example, a first UPF. The first UPF is, for example, the UPF corresponding to the area indicated by the first DNAI. Alternatively, S605 may be replaced as follows: The CMF determines a computing node for the UE. For example, the CMF determines that current location information of the UE corresponds to a first DNAI (or the CMF determines that the UE can access a first DNAI at current location information), and the CMF determines that a computing task is deployed in an area indicated by the first DNAI, the CMF may select a computing node that corresponds to the first DNAI and on which the computing task is deployed. For example, the CMF selects a first computing node. For example, the first computing node supports the first function, or a computing task to which the first function belongs is deployed on the first computing node. Alternatively, S605 may be replaced as follows: The CMF determines a UPF and a computing node for the UE, for example, selects a first UPF and a first computing node. For more content of S605, also refer to S305 in the embodiment shown in FIG. 3A or FIG. 3B.

If the policy information includes a correspondence between at least one piece of indication information and at least one DNAI that is received by the PCF from the AF, the at least one piece of indication information may include second indication information, and the at least one DNAI may include a first DNAI corresponding to the second indication information; or if the policy information may include a correspondence between code of at least one function, at least one piece of indication information, and at least one DNAI that is received by the PCF from the AF, the at least one piece of indication information may include second indication information, the at least one DNAI may include a first DNAI corresponding to the second indication information, and the code of the at least one function may include code of a first function corresponding to the second indication information. After the first UPF is determined, optionally, the method may further include S606 shown in FIG. 6A or FIG. 6B. In S606, the CMF sends second indication information to the first UPF. Correspondingly, the first UPF receives the second indication information from the CMF. Refer to FIG. 6A. Alternatively, in S606, the CMF sends second indication information and code of a first function to the first UPF. Correspondingly, the first UPF receives the second indication information and the code of the first function from the CMF. Refer to FIG. 6B. Alternatively, if the CMF selects the first computing node for the UE, S606 in FIG. 6A may be replaced as follows: The CMF sends second indication information to the first computing node. Correspondingly, the first computing node receives the second indication information from the CMF. Alternatively, S606 in FIG. 6B may be replaced as follows: The CMF sends second indication information and code of a first function to the first computing node. Correspondingly, the first computing node receives the second indication information and the code of the first function from the CMF. This manner may be understood as that the first computing node obtains the code of the first function based on the session establishment request message from the UE (or based on the procedure of establishing the first session). S606 in FIG. 6A or FIG. 6B may be understood as being performed in the procedure of establishing the first session.

If the CMF sends the second indication information to the first UPF, optionally, the method may further include S607 shown in FIG. 6A: The first UPF sends the second indication information to the first computing node. Alternatively, if the CMF sends the second indication information and the code of the first function to the first UPF, optionally, the method may also include S607 shown in FIG. 6B. In this case, S607 includes: The first UPF sends the second indication information and the code of the first function to the first computing node. This manner may be understood as that the first computing node obtains the code of the first function based on the session establishment request message from the UE (or based on the procedure of establishing the first session). Alternatively, if the CMF sends the second indication information to the first computing node, or sends the second indication information and the code of the first function, S607 does not need to be performed.

Optionally, the first computing node may initiate a subscription process to the first UPF in advance. For example, the first computing node sends a subscription request to the first UPF. The subscription request may indicate that when a session establishment event and/or a release event used to access the first computing task (or the first function) occur/occurs, the first UPF is to notify the first computing node. For example, the subscription process occurs before S607, and specific occurrence time is not limited. For example, the subscription process occurs before S601. If the first computing node performs subscription, in S607, the first UPF may send a subscription notification message to the first computing node, where the subscription notification message includes the second indication information, or includes the second indication information and the code of the first function. Alternatively, the first computing node may not need to perform subscription, and the first UPF may actively perform S607.

If the CMF sends the second indication information and the code of the first function to the first computing node in S606, or if the first UPF sends the second indication information and the code of the first function to the first computing node in S607, the first computing node has obtained the code of the first function, and the first computing node may store the second indication information and the code of the first function. Alternatively, if the CMF sends the second indication information to the first computing node in S606 but does not send the code of the first function, or if the first UPF sends the second indication information to the first computing node in S607 but does not send the code of the first function, the first computing node may further obtain the code of the first function based on the second indication information, for example, obtain the code of the first function through S608 shown in FIG. 6A. In this case, the second indication information from the CMF may be considered as being used to trigger the obtaining of the code of the first function. This manner may also be understood as that the first computing node obtains the code of the first function based on the session establishment request message from the UE (or based on the procedure of establishing the first session). For more content of S608, refer to S307 in the embodiment shown in FIG. 3A.

Optionally, after obtaining the code of the first function through S606, S607, or S608, the first computing node may store a correspondence (or an association relationship) between the code of the first function and information about the UE. For more content of this step, refer to the descriptions of storing the correspondence by the first UPF in the embodiment shown in FIG. 3A or FIG. 3B.

Optionally, the method may further include S609 shown in FIG. 6A or FIG. 6B: The CMF sends a session establishment accept message to the UE. After the establishment of the first session of the UE is completed, the CMF may send the session establishment accept message to the UE.

After S609, the method may further include S610 shown in FIG. 6A or FIG. 6B: The UE sends a request 5 to the first computing node. Correspondingly, the first computing node receives the request 5 from the UE. The UE may send the request 5 to the first UPF via the established first session, or the first UPF may receive the request 5 via the first session. For example, it is understood as that after obtaining the code of the first function, the first computing node receives the request 5 via the first session. The request 5 may also be referred to as a first request. The request 5 may be used to access the first function, or is used to request to execute the computing task to which the first function belongs. For example, the request 5 is an HTTP request. The request 5 includes, for example, first indication information, and the first indication information may be used to determine the code of the first function. Optionally, the first indication information and the second indication information may be same information, for example, both are URLs corresponding to the code of the first function.

After receiving the request 5, the first computing node may perform S611 shown in FIG. 6A or FIG. 6B, and run the code of the first function based on the first indication information, to process the request 5. After receiving the request 5, the first UPF may call the code of the first function based on the first indication information, to execute the first function or execute the computing task to which the first function belongs. For example, after receiving the request 5, the first computing node may perform steps such as function instance container startup, runtime initialization, and code initialization that are included in a cold start process shown in FIG. 1 (where a code download step included in the cold start process shown in FIG. 1 has been completed). After cold start is completed, and a function instance is ready, the first computing node may start to execute the request 5.

Optionally, the method may further include S612 shown in FIG. 6A or FIG. 6B: The first computing node sends, to the UE, response information, for example, referred to as a response 2. Correspondingly, the UE receives the response 2 from the first computing node. The response 2 is, for example, HTTP response information, and may be a response to the request 5. For example, the response 2 includes a result of processing the first function (or the computing task to which the first function belongs) by the first computing node.

According to the method described above, the first computing node stores the code of the first function. If no UE requests to access the first function, the first computing node may alternatively release the code of the first function, to save storage space of the first computing node. Optionally, the method may further include S613 and S614 shown in FIG. 6A or FIG. 6B. In S613, the first session of the UE is released. For example, the UE or a network side may trigger the release of the first session of the UE. In S614, the CMF may directly send a first release indication to the first computing node. Correspondingly, the first computing node receives the first release indication from the CMF. The first release indication may indicate to release the first session of the UE. Alternatively, the CMF may send a third release indication to the first UPF. After receiving the third release indication, the first UPF may send a first release indication to the first computing node. The third release indication may indicate to release the first session of the UE.

Optionally, the method may further include S615 shown in FIG. 6A or FIG. 6B: The first computing node releases the code of the first function. For example, S615 is performed after S614. For example, after receiving the first release indication, the first computing node may determine whether there is still a session used to access the first function. If there is still the session used to access the first function, the first computing node does not need to release the code of the first function, but may continue to store the code of the first function. If there is no session used to access the first function, the first computing node may release the code of the first function. For more content of this step, refer to S314 in the embodiment shown in FIG. 3A or FIG. 3B.

In this embodiment of this application, the first computing node may first obtain the code of the first function before receiving the first request from the UE. This is equivalent to that the first computing node first obtains the code of the first function before receiving the request used to access the first function, so that a code download process does not need to be performed after the first request is received, for example, a process after code download included in the cold start is performed. This greatly shortens a delay of function computing, and improves efficiency of the function computing.

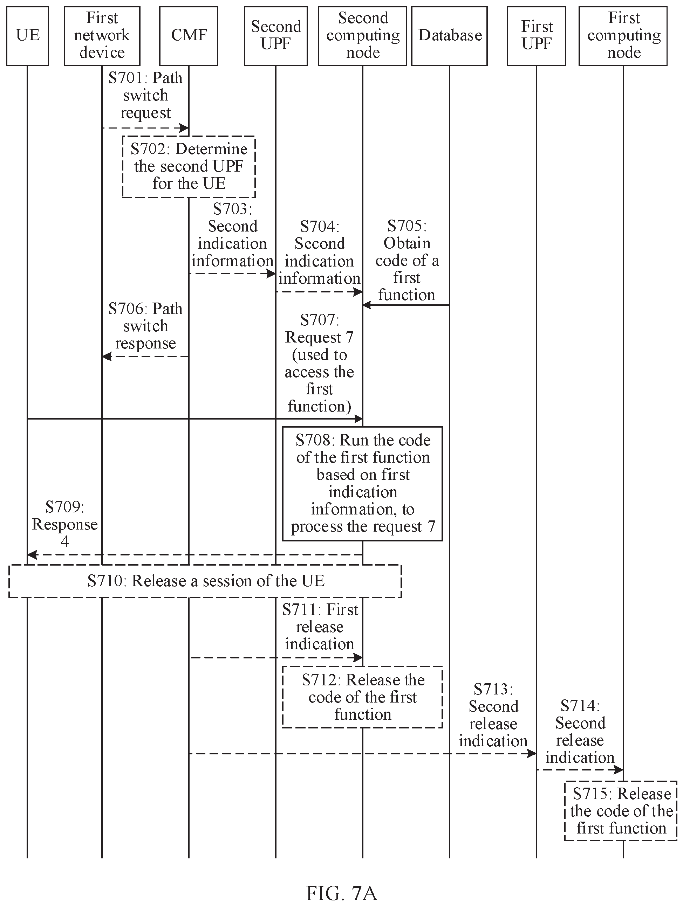

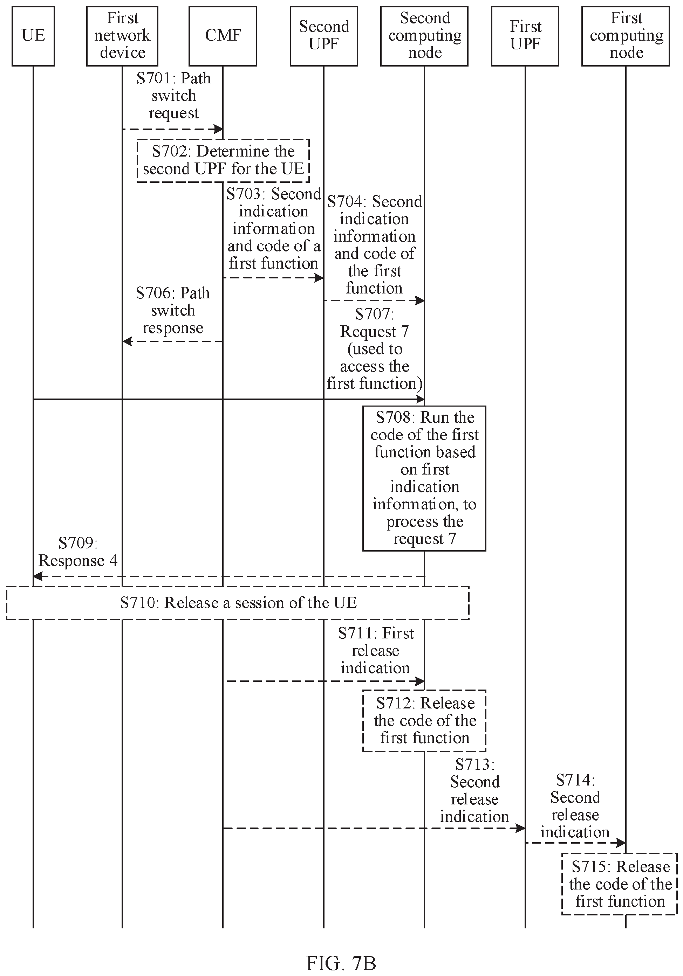

The embodiment shown in FIG. 6A or FIG. 6B relates to a scenario in which the UE does not move. In addition, in a loosely coupled architecture between the UPF and the computing node, the UE may alternatively move. When the UE moves from an original location to a new location, if a computing node corresponding to the new location does not store the code of the first function, the computing node still needs to download the code of the first function, which is time-consuming. Therefore, an embodiment of this application provides a fourth communication method. According to the method, a delay of function computing can also be shortened even if the UE moves. FIG. 7A or FIG. 7B is a flowchart of the method. In the embodiment shown in FIG. 7A or FIG. 7B, an example in which a computing node is not a UPF, a second network element is a database or a PCF, and a first network element is a CMF is still used. A first UPF is a UPF that provides a service for a UE before the UE moves, and a second UPF is a UPF that provides a service for the UE after the UE moves.

S701: A first network device sends a path switch request to the CMF. Correspondingly, the CMF receives the path switch request from the first network device. The first network device is, for example, an access network device, is referred to as a first access network device, and may be a target access network device after the UE moves. In addition, there is further a second network device, which is a network device that serves the UE before the UE moves. For example, the second network device is an access network device, and is referred to as a second access network device. The path switch request may be used to request to switch a transmission path of the UE to the first network device. In other words, after the UE moves, the target access network device of the UE may send the path switch request to the CMF.

Before S701, S601 to S612 in the embodiment shown in FIG. 6A or FIG. 6B may be performed. Details are not described again.

S702: The CMF determines the second UPF for the UE. For example, when the UE moves from the second network device to the first network device (for example, when the CMF receives the path switch request from the first network device), if the CMF determines that current location information of the UE corresponds to a second DNAI (or the CMF determines that the UE can access a second DNAI at current location information), and the CMF determines that a computing task is deployed in an area indicated by the second DNAI, the CMF may select a UPF corresponding to the second DNAI, for example, a second UPF. The second UPF is, for example, the UPF corresponding to the area indicated by the second DNAI. Alternatively, S702 may be replaced as follows: The CMF determines a computing node for the UE. For example, if the CMF determines that current location information of the UE corresponds to a second DNAI (or the CMF determines that the UE can access a second DNAI at current location information), and the CMF determines that a computing task is deployed in an area indicated by the second DNAI, the CMF may select a computing node that corresponds to the second DNAI and on which the computing task is deployed, for example, select a second computing node. For example, the second computing node supports a first function, or a computing task to which the first function belongs is deployed on the second computing node. Alternatively, S702 may be replaced as follows: The CMF determines the second UPF and a second computing node for the UE. For more content of S702, also refer to S305 in the embodiment shown in FIG. 3A or FIG. 3B.

S703: The CMF sends second indication information to the second UPF. Correspondingly, the second UPF receives the second indication information from the CMF. Refer to FIG. 7A. Alternatively, S703 may be replaced as follows: The CMF sends second indication information and code of the first function to the second UPF. Correspondingly, the second UPF receives the second indication information and the code of the first function from the CMF. Refer to FIG. 7B. Alternatively, if the CMF selects the second computing node for the UE, S703 may be replaced as follows: The CMF sends second indication information to the second computing node, or sends the second indication information and code of the first function.

If the CMF sends the second indication information to the second UPF (for example, policy information obtained by the CMF includes a correspondence between at least one piece of indication information and at least one DNAI, where for example, the at least one piece of indication information includes the second indication information, and the at least one DNAI includes the second DNAI corresponding to the second indication information), optionally, the method may further include S704 shown in FIG. 7A: The second UPF sends second indication information to the second computing node. Alternatively, if the CMF sends the second indication information and the code of the first function to the second UPF (for example, policy information obtained by the CMF includes a correspondence between code of at least one function, at least one piece of indication information, and at least one DNAI, where for example, the at least one piece of indication information includes the second indication information, the at least one DNAI includes the second DNAI corresponding to the second indication information, and the code of the at least one function includes the code of the first function corresponding to the second indication information), optionally, the method may also include S704 shown in FIG. 7B. In this case, S704 includes the following step: The second UPF sends the second indication information and the code of the first function to the second computing node. Alternatively, if the CMF sends the second indication information to the second computing node, or sends the second indication information and the code of the first function, S704 does not need to be performed.

Optionally, the second computing node may initiate a subscription process to the second UPF in advance. In this case, in S704, the second UPF may send the second indication information or the second indication information and the code of the first function to the second computing node based on subscription. For this process, refer to the related descriptions of the embodiment shown in FIG. 6A or FIG. 6B.

If the CMF sends the second indication information and the code of the first function to the second computing node in S703 (refer to FIG. 7B), or if the second UPF sends the second indication information and the code of the first function to the second computing node in S704 (refer to FIG. 7B), the second computing node has obtained the code of the first function, and the second computing node may store the second indication information and the code of the first function. Alternatively, if the CMF sends the second indication information to the second computing node in S703 but does not send the code of the first function (refer to FIG. 7A), or if the second UPF sends the second indication information to the second computing node in S704 but does not send the code of the first function (refer to FIG. 7A), the second computing node may further obtain the code of the first function based on the second indication information, for example, obtain the code of the first function through S705 shown in FIG. 7A. In this case, the second indication information from the CMF may be considered as being used to trigger the obtaining of the code of the first function. For more content of S705, refer to S307 in the embodiment shown in FIG. 3A.

Optionally, after obtaining the code of the first function through S703, S704, or S705, the second computing node may store a correspondence (or an association relationship) between the code of the first function and information about the UE. For more content of this step, refer to the descriptions of storing the correspondence by the first UPF in the embodiment shown in FIG. 3A or FIG. 3B.

Optionally, the method may further include S706 shown in FIG. 7A or FIG. 7B: The CMF sends a path switch response to the first network device. Correspondingly, the first network device receives the path switch response from the CMF. The path switch response may indicate that the path switch succeeds.

The method may further include S707 shown in FIG. 7A or FIG. 7B: The UE sends a request 7 to the second computing node. Correspondingly, the second computing node receives the request 7 from the UE. The request 7 may also be referred to as a first request. The request 7 may be used to access the first function, or is used to request to execute the computing task to which the first function belongs. For example, the request 7 is an HTTP request. The request 7 includes, for example, first indication information. The first indication information may be used to determine the code of the first function. For example, the first indication information includes information used to determine the code of the first function. Optionally, the first indication information and the second indication information may be same information, for example, both are URLs corresponding to the code of the first function.

After receiving the request 7, the second computing node may perform S708 shown in FIG. 7A or FIG. 7B, and run the code of the first function based on the first indication information, to process the request 7. After receiving the request 7, the first UPF may call the code of the first function based on the first indication information, to execute the first function or execute the computing task to which the first function belongs. For example, after receiving the request 7, the second computing node may perform steps such as function instance container startup, runtime initialization, and code initialization that are included in a cold start process shown in FIG. 1 (where a code download step included in the cold start process shown in FIG. 1 has been completed). After cold start is completed, and a function instance is ready, the second computing node may start to execute the request 7.

Optionally, the method may further include S709 shown in FIG. 7A or FIG. 7B: The second computing node sends, to the UE, response information, for example, referred to as a response 4. Correspondingly, the UE receives the response 4 from the second computing node. The response 4 is, for example, HTTP response information, and may be a response to the request 7. For example, the response 4 includes a result of processing the first function (or the computing task to which the first function belongs) by the second computing node.

According to the method described above, the second computing node stores the code of the first function. If no UE requests to access the first function, the second computing node may alternatively release the code of the first function, to save storage space of the second computing node. Optionally, the method may further include S710 and S711 shown in FIG. 7A or FIG. 7B. In S710, the first session of the UE is released. For example, the UE or a network side may trigger the release of the first session of the UE. In S711, the CMF may directly send a first release indication to the second computing node. Correspondingly, the second computing node receives the first release indication from the CMF. The first release indication may indicate to release the first session of the UE. Alternatively, the CMF may send a third release indication to the second UPF. After receiving the third release indication, the second UPF may send a first release indication to the second computing node. The third release indication may indicate to release the first session.

Optionally, the method may further include S712 shown in FIG. 7A or FIG. 7B: The second computing node releases the code of the first function. For example, S712 is performed after S711. For more content of S712, refer to S314 in the embodiment shown in FIG. 3A or FIG. 3B.

In addition, the session of the UE has been switched to the second UPF, and the first UPF no longer maintains the session of the UE. Therefore, optionally, the method may further include S713 shown in FIG. 7A or FIG. 7B: The CMF sends a second release indication to the first UPF. Correspondingly, the first UPF receives the second release indication from the CMF. The second release indication may indicate to release an N4 session between the CMF and the UE. For example, the second release indication carries an identifier of the N4 session. After receiving the second release indication, the first UPF may release the N4 session. In addition, optionally, after receiving the second release indication, the first UPF may alternatively perform S714 shown in FIG. 7A or FIG. 7B: The first UPF sends, to the first computing node, indication information, for example, referred to as indication information 1. The indication information 1 may indicate that the session used by the UE to access the first function has been released. The indication information 1 may be the second release indication, or may be indication information generated based on the second release indication. In this case, after receiving the indication information 1, if determining that there is no session used to access the first function, the first computing node may perform S715 shown in FIG. 7A or FIG. 7B: Release the code of the first function. For this process, refer to S314 in the embodiment shown in FIG. 3A or FIG. 3B. Alternatively, S713 may be replaced as follows: The CMF sends a second release indication to the first computing node. Alternatively, in S713, the CMF separately sends a second release indication to the first computing node and the first UPF. In this case, S714 may not be performed. After receiving the second release indication, if determining that there is no session used to access the first function, the first computing node may perform S715. Alternatively, S714 may be replaced as follows: The CMF sends indication information 1 to the first computing node. After receiving the second release indication, if determining that there is no session used to access the first function, the first computing node may perform S715.

In this embodiment of this application, in a loosely coupled architecture between the computing node and the UPF, even in a scenario in which the UE moves, the new computing node may also first obtain the code of the first function before receiving the request used to access the first function, so that a code download process does not need to be performed after the request is received, for example, a process after code download included in the cold start is performed. This greatly shortens a delay of function computing, and improves efficiency of the function computing.

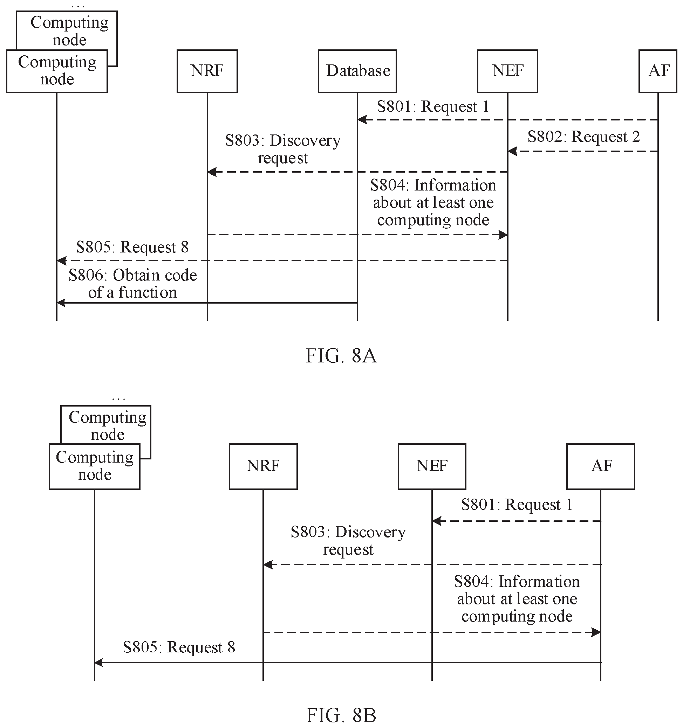

In the foregoing embodiment, both the storage and release of the code of the function are related to the UE. For example, the code of the function is stored in the computing node in a session establishment process of the UE, and the corresponding code of the function is released when the session of the UE is released. In addition, an embodiment of this application provides a fifth communication method. In the method, a process of storing and releasing code of a function is unrelated to a UE. FIG. 8A or FIG. 8B is a flowchart of the method. In the embodiment shown in FIG. 8A or FIG. 8B, for example, a second network element is a database or an NEF.

S801: An AF sends a request 1 to the second network element. Correspondingly, the second network element receives the request 1 from the AF. The request 1 may also be referred to as a third request.

The request 1 may include a correspondence (or an association relationship) between code of at least one function and at least one piece of indication information. The function (or the code of the function) may be in one-to-one correspondence with the indication information, and one piece of indication information may be used to determine corresponding code of a function. For example, indication information corresponding to a first function (or code of a first function) is second indication information, and the request 1 includes a correspondence between the code of the first function and the second indication information (that is, the code of the at least one function includes the code of the first function, and the at least one piece of indication information includes the second indication information). In this case, the second indication information may be used to determine the code of the first function.

Optionally, if the second network element is the database (refer to FIG. 8A), the request 1 may be used to store the correspondence between the code of the at least one function and the at least one piece of indication information in the database. After receiving the request 1, the database may reply to the AF with response information, for example, referred to as a response 1. The response 1 may indicate that the request 1 is successfully received, indicate that the correspondence is successfully stored, or the like.

Alternatively, if the second network element is the NEF (refer to FIG. 8B), the correspondence included in the request 1 may specifically include a correspondence between the code of the at least one function, the at least one piece of indication information, and at least one piece of location information. The location information may be a deployment location of a function corresponding to the code of the at least one function. For example, one piece of location information may be represented by using one DNAI. In other words, the correspondence may be a correspondence between the code of the at least one function, the at least one piece of indication information, and at least one DNAI. The code of the at least one function includes the code of the first function, the at least one piece of indication information includes the second indication information, and the at least one DNAI includes one or more DNAIs corresponding to the code of the first function and the second indication information.

For more content of S801, refer to S301 in the embodiment shown in FIG. 3A or FIG. 3B.

If the second network element is the database, optionally, the method may further include S802 shown in FIG. 8A: The AF sends a request 2 to the NEF. Correspondingly, the NEF receives the request 2 from the AF. The request 2 may also be referred to as a fourth request. The request 2 may include a correspondence between at least one piece of indication information and at least one piece of location information. The at least one piece of indication information includes second indication information, and the at least one piece of location information includes one or more DNAIs corresponding to the second indication information. For the correspondence, refer to the foregoing descriptions.

Regardless of whether the second network element is the NEF or the database, optionally, the method further includes S803 shown in FIG. 8A or FIG. 8B: The NEF sends a discovery request to an NRF. Correspondingly, the NRF receives the discovery request from the NEF. The discovery request may be used to discover a computing node that corresponds to location information and on which a computing task is deployed. Optionally, the discovery request may include the location information on which the computing task is deployed, and the location information is represented by, for example, a DNAI. Optionally, the discovery request may include a DNN or S-NSSAI.

Optionally, the method further includes S804 shown in FIG. 8A or FIG. 8B: The NRF sends information about at least one computing node to the NEF. Correspondingly, the NEF receives the information about the at least one computing node from the NRF. For example, after receiving the discovery request, the NRF may determine computing nodes that correspond to specific DNAIs and on which computing tasks (which may include any computing task) are deployed, and the NRF may send information about these computing nodes to the NEF. Optionally, information about a computing node includes, for example, an identity of the computing node and/or address information of the computing node. The at least one computing node includes, for example, a computing node such as a UPF and/or a server.

Optionally, the method may further include S805 shown in FIG. 8A or FIG. 8B: After receiving the information about the at least one computing node, the NEF may send a request 8 to some or all of the at least one computing node. Correspondingly, each of some or all of the computing nodes receives the request 8. The request 8 may also be referred to as a fifth request. The request 8 sent by the NEF to a computing node may include indication information corresponding to all or some of functions corresponding to a computing task deployed in the computing node. Content included in requests 8 received by different computing nodes may be the same or different. For example, if the at least one computing node includes a computing node 1, a computing task 1 is deployed on the computing node 1, and the computing task 1 corresponds to the first function, the request 8 sent by the NEF to the computing node 1 may include the second indication information corresponding to the code of the first function. For another example, if the at least one computing node includes a computing node 2, no computing task 1 is deployed on the computing node 2, and a function corresponding to a computing task deployed on the computing node 2 does not include the first function, the request 8 sent by the NEF to the computing node 2 may not include the second indication information corresponding to the code of the first function. If the NEF obtains the correspondence between the at least one piece of indication information and the at least one piece of location information through S802 (refer to FIG. 8A), the request 8 sent by the NEF may include the indication information but does not include code of a function; or if the NEF obtains the correspondence between the at least one piece of indication information, the code of the at least one function, and the at least one piece of location information through S801 (refer to FIG. 8B), the request 8 sent by the NEF may include the indication information and the code of the function. For example, the at least one computing node includes a computing node 1, a computing task 1 is deployed on the computing node 1, and the computing task 1 corresponds to the first function. In this case, if the NEF obtains the correspondence between the at least one piece of indication information and the at least one piece of location information through S802 shown in FIG. 8A (where the at least one piece of indication information includes the second indication information), the request 8 sent by the NEF to the computing node 1 may include the second indication information corresponding to the code of the first function; or if the NEF obtains the correspondence between the at least one piece of indication information, the code of the at least one function, and the at least one piece of location information through S801 shown in FIG. 8B (where the at least one piece of indication information includes the second indication information), the request 8 sent by the NEF to the computing node 1 may include the second indication information and the code of the first function.

Optionally, after receiving the indication information from the NEF or receiving the indication information and the code of the function, the computing node may send response information to the NEF, to indicate that the indication information is successfully received.

If the NEF sends the indication information and the code of the function to a computing node in S805, the corresponding computing node has obtained code of a function corresponding to a computing task deployed on the computing node, and the computing node may store indication information corresponding to the code of the function and the code of the function. Alternatively, if the NEF sends the indication information to a computing node but does not send the code of the function in S805, the corresponding computing node may further obtain code of a function based on the indication information (for example, may obtain the code of the function based on S806 shown in FIG. 8A, where for S806, refer to S307 in the embodiment shown in FIG. 3A). In this case, the indication information from the NEF may be considered as being used to trigger the obtaining of the code of the function. For more descriptions of this part of content, refer to S306 and S307 in the embodiment shown in FIG. 3A.

After obtaining the corresponding code of the function, the computing node may store the code of the function. If a computing task deployed on the computing node or a function is called, code of the function may be directly called, to execute the function, or execute the computing task to which the function belongs. For example, after receiving a request used to request to access a function or a computing task, a computing node may perform steps such as function instance container startup, runtime initialization, and code initialization that are included in a cold start process shown in FIG. 1 (where a code download step included in the cold start process shown in FIG. 1 has been completed). After cold start is completed, and a function instance is ready, the computing node may start to execute the request.

In this embodiment of this application, the computing node may first obtain the code of the function before receiving the request used to access the function, so that a code download process does not need to be performed after the request is received, for example, a process after code download included in the cold start is performed. This greatly shortens a delay of function computing, and improves efficiency of the function computing. In addition, in this embodiment of this application, a process of obtaining the code of the function in advance is decoupled from behavior of the UE, so that the code of the function can be obtained earlier. This helps reduce a signaling transmission process in a session establishment process of the UE, and improve efficiency of establishing the session by the UE.

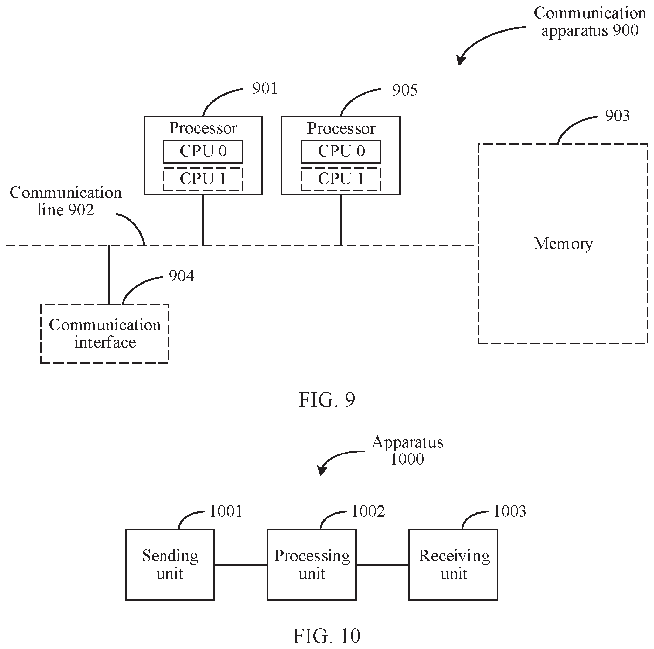

FIG. 9 is a diagram of a structure of a communication apparatus according to an embodiment of this application. The communication apparatus 900 may be the first UPF in the embodiment shown in any one of FIG. 3A, FIG. 3B, FIG. 5A, or FIG. 5B or a circuit system of the first UPF, and is configured to implement the method corresponding to the first UPF in the foregoing method embodiments. Alternatively, the communication apparatus 900 may be the second UPF in the embodiment shown in any one of FIG. 5A or FIG. 5B or a circuit system of the second UPF, and is configured to implement the method corresponding to the second UPF in the foregoing method embodiments. Alternatively, the communication apparatus 900 may be the first computing node in the embodiment shown in any one of FIG. 6A, FIG. 6B, FIG. 7A, or FIG. 7B or a circuit system of the first computing node, and is configured to implement the method corresponding to the first computing node in the foregoing method embodiments. Alternatively, the communication apparatus 900 may be the second computing node in the embodiment shown in either FIG. 7A or FIG. 7B or a circuit system of the second computing node, and is configured to implement the method corresponding to the second computing node in the foregoing method embodiments. Alternatively, the communication apparatus 900 may be the CMF in the embodiment shown in any one of FIG. 3A, FIG. 3B, FIG. 5A, FIG. 5B, FIG. 6A, FIG. 6B, FIG. 7A, or FIG. 7B or a circuit system of the CMF, and is configured to implement the method corresponding to the CMF in the foregoing method embodiments. Alternatively, the communication apparatus 900 may be the database in the embodiment shown in any one of FIG. 3A, FIG. 5A, FIG. 6A, or FIG. 7A or a circuit system of the database, and is configured to implement the method corresponding to the database in the foregoing method embodiments. Alternatively, the communication apparatus 900 may be the AF in the embodiment shown in any one of FIG. 3A, FIG. 3B, FIG. 5A, FIG. 5B, FIG. 6A, FIG. 6B, FIG. 7A, FIG. 7B, FIG. 8A, or FIG. 8B or a circuit system of the AF, and is configured to implement the method corresponding to the AF in the foregoing method embodiments. Alternatively, the communication apparatus 900 may be the NEF in the embodiment shown in any one of FIG. 8A or FIG. 8B or a circuit system of the NEF, and is configured to implement the method corresponding to the NEF in the foregoing method embodiments. For example, a circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent devices, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. The memory 903, the communication line 902, and the communication interface 904 are all optional, and therefore are all represented by dashed lines in FIG. 9.

Optionally, the communication apparatus 900 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 900 through an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 902 may include a path for information transmission between the foregoing components.

The communication interface 904 uses any transceiver-type apparatus, to communicate with another device or a communication network such as an Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls execution. The processor 901 is configured to execute the computer-executable instructions stored in the memory 903, to implement steps performed by the computing node, the first computing node, the second computing node, the CMF, the AF, the database, or the NEF in the embodiment shown in any one of FIG. 3A, FIG. 3B, FIG. 5A, FIG. 5B, FIG. 6A, FIG. 6B, FIG. 7A, FIG. 7B, FIG. 8A, or FIG. 8B.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of a computing node, a chip of a first computing node, a chip of a second computing node, a chip of a CMF, a chip of an AF, a chip of a database, or a chip of an NEF, the chip includes a processor 901 (and may further include a processor 905), a communication line 902, and a communication interface 904; and optionally, may include a memory 903. Specifically, the communication interface 904 may be an input interface, a pin, a circuit, or the like. The memory 903 may be a register, a cache, or the like. The processor 901 and the processor 905 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when functional modules are obtained through division based on corresponding functions, FIG. 10 is a diagram of an apparatus. The apparatus 1000 may be the computing node, the first computing node, the second computing node, the CMF, the AF, the database, or the NEF in the foregoing method embodiments. Alternatively, the apparatus 1000 may be a chip in the computing node, a chip in the first computing node, a chip in the second computing node, a chip in the CMF, a chip in the AF, a chip in the database, or a chip in the NEF in the foregoing method embodiments. The apparatus 1000 includes a sending unit 1001, a processing unit 1002, and a receiving unit 1003.

It should be understood that the apparatus 1000 may be configured to implement steps performed by the computing node, the first computing node, the second computing node, the CMF, the AF, the database, or the NEF in the communication method in embodiments of this application. For related features, refer to the embodiment shown in any one of FIG. 3A, FIG. 3B, FIG. 5A, FIG. 5B, FIG. 6A, FIG. 6B, FIG. 7A, FIG. 7B, FIG. 8A, or FIG. 8B. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented through the communication interface 904 in FIG. 9.

Optionally, when the apparatus 1000 is a chip or a circuit, functions/implementation processes of the sending unit 1001 and the receiving unit 1003 may alternatively be implemented through a pin, a circuit, or the like.

This application further provides a computer-readable storage medium. The computer-readable storage medium stores a computer program or instructions. When the computer program or the instructions are run, the method performed by the computing node, the first computing node, the second computing node, the CMF, the AF, the database, or the NEF in the foregoing method embodiments is implemented. In this way, the functions in the foregoing embodiments may be implemented in a form of a software functional unit and sold or used as an independent product. Based on such an understanding, the technical solution of this application essentially, or the part that makes contributions, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the computing node, the first computing node, the second computing node, the CMF, the AF, the database, or the NEF in any one of the foregoing method embodiments.

An embodiment of this application further provides a processing apparatus, including a processor and an interface. The processor is configured to perform the method performed by the computing node, the first computing node, the second computing node, the CMF, the AF, the database, or the NEF in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by using a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information into the storage medium. Optionally, the storage medium may be integrated into a processor. The processor and the storage medium may be disposed in an ASIC, and the ASIC may be disposed in a terminal device. Optionally, the processor and the storage medium may be alternatively disposed in different components of the terminal device.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the computing node, the first computing node, the second computing node, the CMF, the AF, the database, or the NEF may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A communication method, applied to a computing node, wherein the method comprises:
obtaining code of a first function based on a session establishment request of a terminal device, wherein the session establishment request is used to request to establish a first session;
after obtaining the code of the first function, receiving, from the terminal device via the first session, a first request used to access the first function; and
running the code of the first function based on the first request, to process the first request.

2. The method according to claim 1, wherein the first request comprises first indication information, and the first indication information is used to determine the code of the first function.

3. The method according to claim 1 or 2, wherein the obtaining the code of the first function based on the session establishment request of the terminal device comprises:
receiving second indication information from a first network element, wherein the second indication information is used to determine the code of the first function, and the second indication information is received in a procedure of establishing the first session;
sending a second request to a second network element, wherein the second request comprises the second indication information, the second request is used to request the code of the first function, and the second indication information is used by the second network element to determine the code of the first function; and
receiving the code of the first function from the second network element.

4. The method according to claim 1 or 2, wherein the obtaining the code of the first function based on the session establishment request of the terminal device comprises:
receiving second indication information and the code of the first function from a first network element, wherein the second indication information is used to determine the code of the first function, and the second indication information and the code of the first function are sent by the first network element in a procedure of establishing the first session.

5. The method according to claim 3 or 4, wherein the first network element comprises a computing management function CMF or a user plane function UPF.

6. The method according to any one of claims 1 to 5, wherein the method further comprises:
receiving a first release indication, wherein the first release indication indicates to release the first session; and
deleting the code of the first function.

7. The method according to claim 6, wherein the deleting the code of the first function comprises:
when there is no session used to access the first function, deleting the code of the first function.

8. The method according to any one of claims 1 to 7, wherein after the obtaining the code of the first function based on the session establishment request of the terminal device, the method further comprises:
storing a correspondence between information about the terminal device and the code of the first function, wherein the correspondence indicates that there is a session used by the terminal device to access the first function.

9. The method according to claim 8, wherein the information about the terminal device comprises one or more of an identifier of a session corresponding to the terminal device, an identity of the terminal device, or address information of the terminal device.

10. The method according to any one of claims 1 to 9, wherein the computing node comprises a UPF or a server.

11. A communication method, applied to a first network element, wherein the method comprises:
receiving a session establishment request from a terminal device, wherein the session establishment request is used to request to establish a first session, and the first session is used by the terminal device to access a first function;
determining a first data network access identifier DNAI corresponding to location information of the terminal device;
determining a first computing node corresponding to the first DNAI, wherein the first computing node supports the first function;
sending second indication information to the first computing node, wherein the second indication information is used to determine code of the first function; and
sending a session establishment accept message to the terminal device, wherein the session establishment accept message indicates that the establishment of the first session is completed, the code of the first function is used to process a request that is from the terminal device and that is used to access the first function, and the request used to access the first function is sent by the terminal device after the terminal device receives the session establishment accept message.

12. The method according to claim 11, wherein the method further comprises:
receiving policy information from a policy control function PCF, wherein the policy information comprises a correspondence between the first DNAI and the second indication information.

13. The method according to claim 12, wherein the method further comprises:
when the terminal device moves from a first access network device to a second access network device, determining a second DNAI corresponding to current location information of the terminal device;
determining a second computing node corresponding to the second DNAI, wherein the second computing node supports the first function; and
sending the second indication information to the second computing node, wherein the policy information further comprises a correspondence between the second DNAI and the second indication information.

14. The method according to claim 11, wherein the sending second indication information to the first computing node comprises:
sending the second indication information and the code of the first function to the first computing node.

15. The method according to claim 14, wherein the method further comprises:
receiving policy information from a PCF, wherein the policy information comprises a correspondence between the code of the first function, the first DNAI, and the second indication information.

16. The method according to claim 15, wherein the method further comprises:
when the terminal device moves from a first access network device to a second access network device, determining a second DNAI corresponding to current location information of the terminal device;
determining a second computing node corresponding to the second DNAI, wherein the second computing node supports the first function; and
sending the second indication information and the code of the first function to the second computing node, wherein the policy information further comprises a correspondence between the code of the first function, the second DNAI, and the second indication information.

17. The method according to claim 13 or 16, wherein the method further comprises:
sending a second release indication to the first computing node, wherein the second release indication indicates to release the first session.

18. The method according to any one of claims 11 to 17, wherein the method further comprises:
sending a first release indication to the second computing node, wherein the first release indication indicates to release a session between the second computing node and the terminal device, and the second computing node is a computing node that serves the terminal device after the terminal device moves.

19. The method according to any one of claims 11 to 18, wherein the first network element comprises a CMF.

20. A communication apparatus, wherein the communication apparatus comprises a processing unit and a transceiver unit, and the processing unit is coupled to the transceiver unit, to perform the method according to any one of claims 1 to 10, or perform the method according to any one of claims 11 to 19.

21. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 10, or to cause the communication apparatus to perform the method according to any one of claims 11 to 19.

22. A computer-readable storage medium, wherein the computer-readable storage medium is configured to store a computer program, and when the computer program is run on a computer, the computer is caused to perform the method according to any one of claims 1 to 10, or the computer is caused to perform the method according to any one of claims 11 to 19.

23. A computer program product, wherein the computer program product comprises a computer program, and when the computer program is run on a computer, the computer is caused to perform the method according to any one of claims 1 to 10, or the computer is caused to perform the method according to any one of claims 11 to 19.

24. A chip system, wherein the chip system comprises:
a processor and an interface, wherein the processor is configured to: invoke instructions from the interface and run the instructions, and when the processor executes the instructions, the method according to any one of claims 1 to 10 is implemented, or the method according to any one of claims 11 to 19 is implemented.

25. A communication system, wherein the communication system comprises a computing node and a first network element, wherein
the computing node is configured to perform the method according to any one of claims 1 to 10; and
the first network element is configured to perform the method according to any one of claims 11 to 19.
